(19) Europäisches Patentamt
European Patent Office
Office européen des brevets

(11) EP 2 165 243 B1

(12) **EUROPEAN PATENT SPECIFICATION**

(45) Date of publication and mention
of the grant of the patent:
**12.02.2014 Bulletin 2014/07**

(21) Application number: **08762397.1**

(22) Date of filing: **18.06.2008**

(51) Int Cl.:
***G05D 23/00*** (2006.01)

(86) International application number:
**PCT/GB2008/002073**

(87) International publication number:
**WO 2008/155538 (24.12.2008 Gazette 2008/52)**

(54) **LIQUID HEATING VESSEL AND CONTROL**

FLÜSSIGKEITSERWÄRMUNGSBEHÄLTER UND STEUERUNG

RÉCIPIENT CHAUFFANT POUR LIQUIDE ET COMMANDE

(84) Designated Contracting States:
**AT BE BG CH CY CZ DE DK EE ES FI FR GB GR
HR HU IE IS IT LI LT LU LV MC MT NL NO PL PT
RO SE SI SK TR**

(30) Priority: **18.06.2007 GB 0711752
19.07.2007 GB 0714146
07.11.2007 GB 0721858
09.05.2008 GB 0808483
12.05.2008 PCT/GB2008/001632**

(43) Date of publication of application:
**24.03.2010 Bulletin 2010/12**

(60) Divisional application:
**13178601.4 / 2 661 994**

(73) Proprietor: **Otter Controls Limited
Buxton Derbyshire SK17 7LF (GB)**

(72) Inventors:
• **MOORE, Robin, Keith
Buxton Derbyshire SK17 9BG (GB)**

• **HADFIELD, Robert, Henry
Marple Cheshire SK6 6DF (GB)**
• **WRIGHT, Peter, Hallam
Norton Green
Stoke-on-Trent ST6 8NW (GB)**
• **SMITH, David, Andrew
Macclesfield Cheshire SK10 2UN (GB)**
• **GAETA, Antonio, Martin
Buxton Derbyshire SK17 6RA (GB)**
• **SIDDONS, Jeremy
Chapel-en-le-Frith
Derbyshire SK23 0NE (GB)**

(74) Representative: **Cross, James Peter Archibald
RGC Jenkins & Co.
26 Caxton Street
London SW1H 0RJ (GB)**

(56) References cited:
**EP-A1- 0 061 334      EP-A1- 1 195 120
EP-A1- 1 816 659      WO-A1-2008/144805
GB-A- 2 328 143**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

## Description

The present invention relates to electrically powered liquid heating vessels and to electronic controls therefor.

## Background to the Invention

Electrically powered liquid heating vessels, such as kettles, typically include one or more controls such as a boil control for responding to a boil condition and a dry boil control for responding to an overheat condition where there is no liquid in the appliance. Typically, these controls are electromechanical and comprise one or more thermal actuators and switches. Electromechanical controls are cheap to manufacture and are generally reliable, but are limited in their functions.

Electronic controls, incorporating an electronic controller such as a microprocessor and one or more electrical or electronic sensors, have been proposed as an alternative to electromechanical controls. Early proposals include the applicant's own patent publications GB-A-2185161 and GB-A-2228634.

One problem with existing liquid heating vessels is that they require electrical connections to the vessel body, such that the vessel cannot easily be made washproof.

Additionally, it would be desirable for an electronic control to be able to determine accurately the level of liquid in the vessel.

Additionally, it would be desirable to be able to determine the temperature of the liquid, or to detect boiling or simmering, without requiring a thermistor or even without providing any temperature sensor within the vessel body.

WO-A-2008/144805 (prior art under Art. 54(3) EPC) discloses a liquid heating vessel comprising a vessel body, a cordless base for providing an electrical connection to the vessel body regardless of the rotational orientation of the vessel body on the base, an electronic control and an infra-red or optical connector for the control between the vessel body and the base, the infra-red or optical connector comprising a circular or annular light guide and an infra-red or optical coupler that provides an infra-red or optical coupling with the circular or annular light guide when the vessel body is positioned on the base, regardless of the rotational orientation of the vessel body on the base.

## Statement of the Invention

According to the present invention, there is providing a liquid heating vessel according to claim 1.

## Brief Description of the Drawings

Embodiments of the invention will now be described with reference to the drawings identified below.

Figure 1 is a schematic diagram of a liquid heating vessel in an embodiment of the invention.

Figure 2 is a plan view of a discrete component comprising an integrated cordless connector and power/switching board of an electronic control in an embodiment of the invention.

Figure 3 is a perspective view of the component of Figure 2 positioned in a base section of a kettle.

Figure 4 is a plan view of an element plate for connection to the component of Figure 2.

Figure 5 is a perspective view of the element plate installed in the base section, above the component of Figure 2.

Figure 6 is a vertical cross-section through the centre of the element plate, component and base section of Figure 5.

Figure 7 is a plan view of a user interface of the electronic control.

Figure 8 is a cut-away view of the user interface installed in the handle of a kettle.

Figures 9a to 9d are circuit diagrams of an electronic control according to an embodiment of the invention.

Figure 10 is a schematic diagram of an arrangement for optical connection between a kettle body and a power base in an embodiment of the invention.

Figure 11 is a schematic diagram of an embodiment comprising a liquid heating vessel including a remote control.

Figure 12 is a schematic diagram of an embodiment comprising a liquid heating vessel including a remote control and an intermediate module.

Figure 13 is a schematic diagram of an embodiment comprising a liquid heating vessel including a remote control and an intermediate module connected between the vessel and a mains outlet.

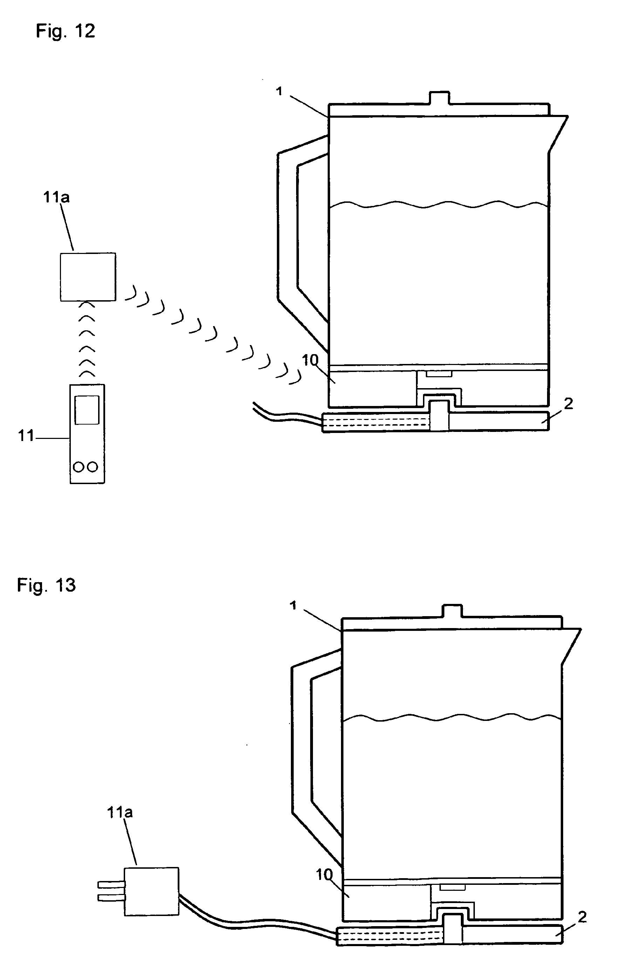

Figure 13 is a schematic diagram of means for optical communication between a vessel body and a power base, in an embodiment of the invention.

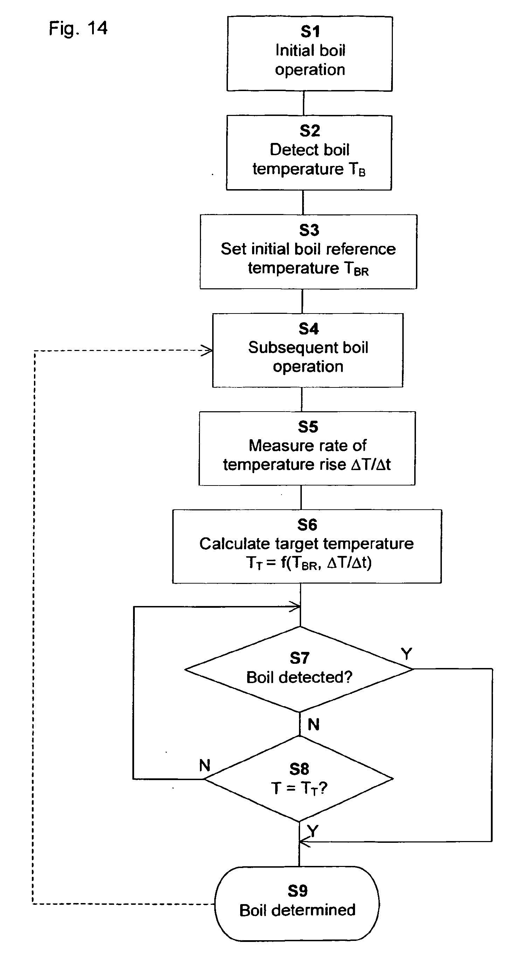

Figure 14 is a flowchart of a boil control algorithm in an embodiment of the invention.

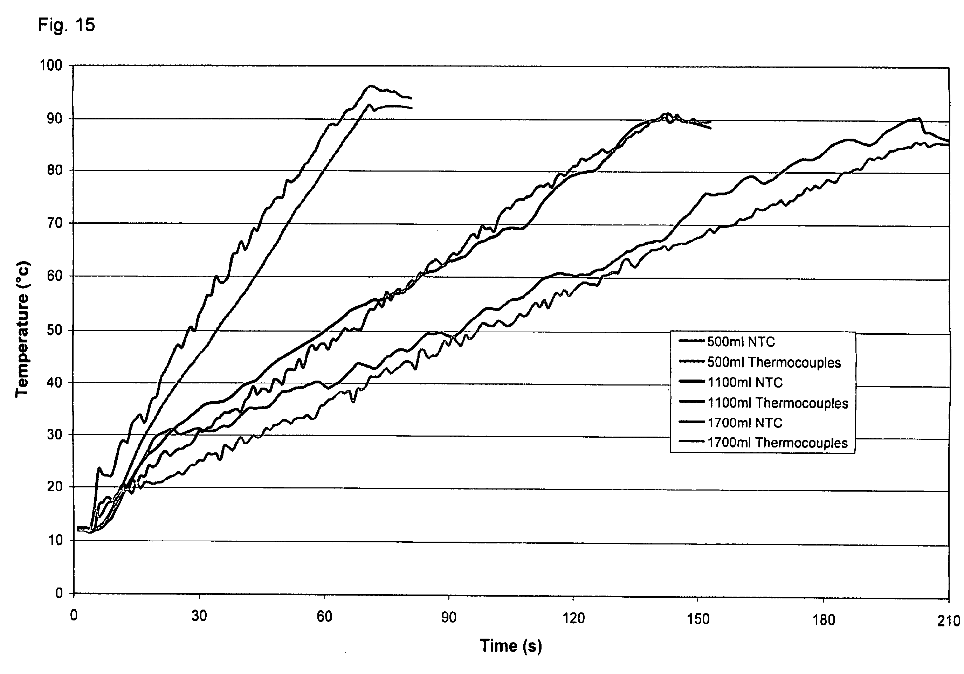

Figure 15 is a graph of sensed temperature and water temperature against time, for three different fill levels of a kettle.

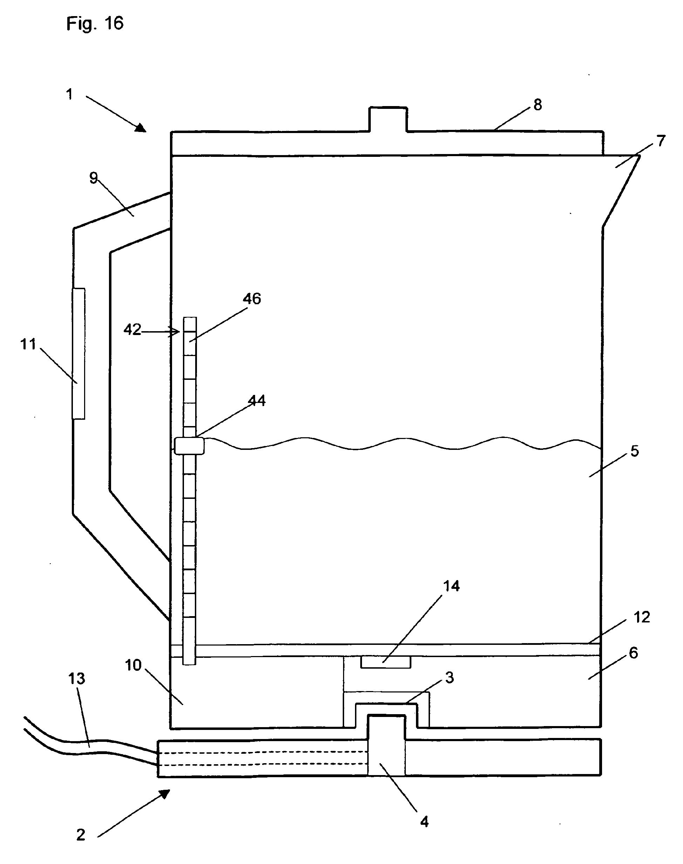

Figure 16 is a diagram of a level sensor using reed switches, in an embodiment of the invention.

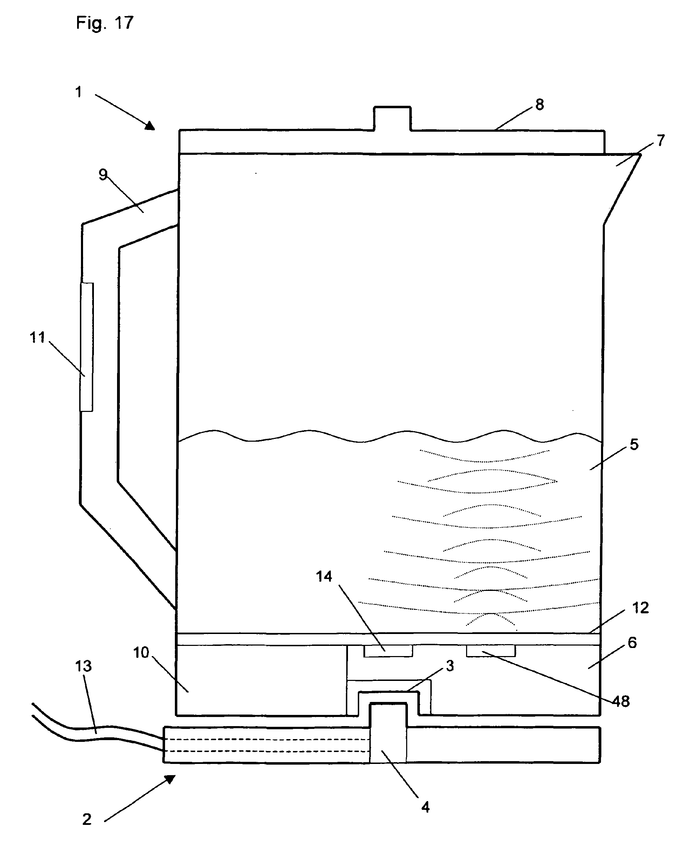

Figure 17 is a diagram of a level sensor using an ultrasonic transducer, in another embodiment of the invention.

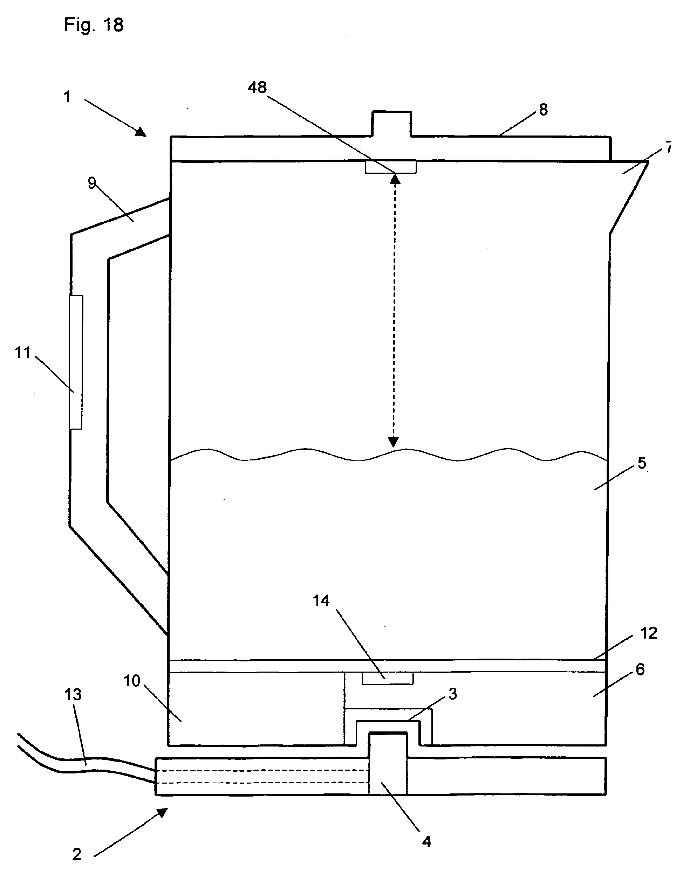

Figure 18 is a diagram of a level sensor using a distance measuring device, in another embodiment.

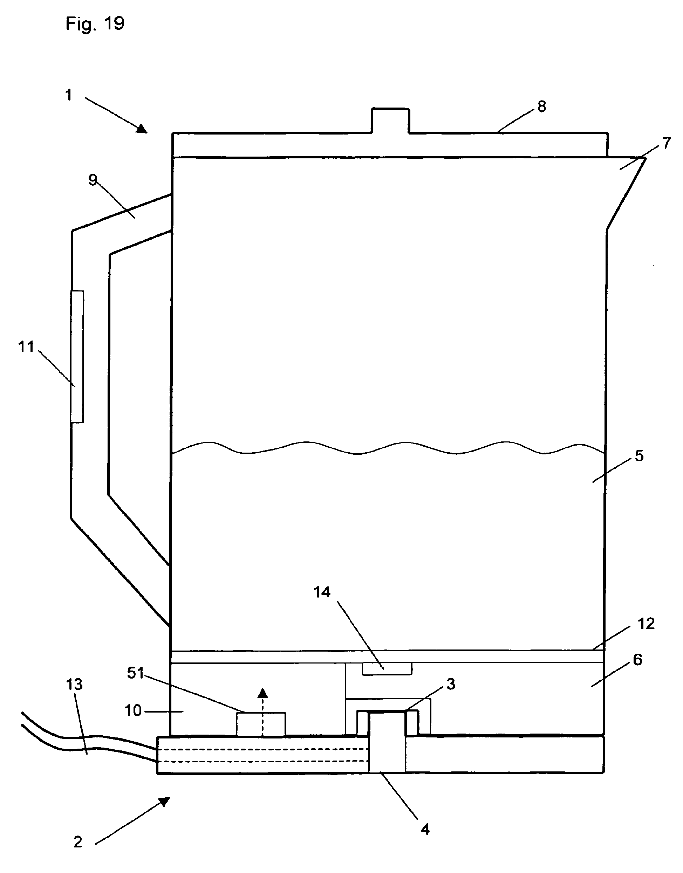

Figure 19 is a diagram of a liquid heating vessel including a force sensor, in another embodiment of the invention.

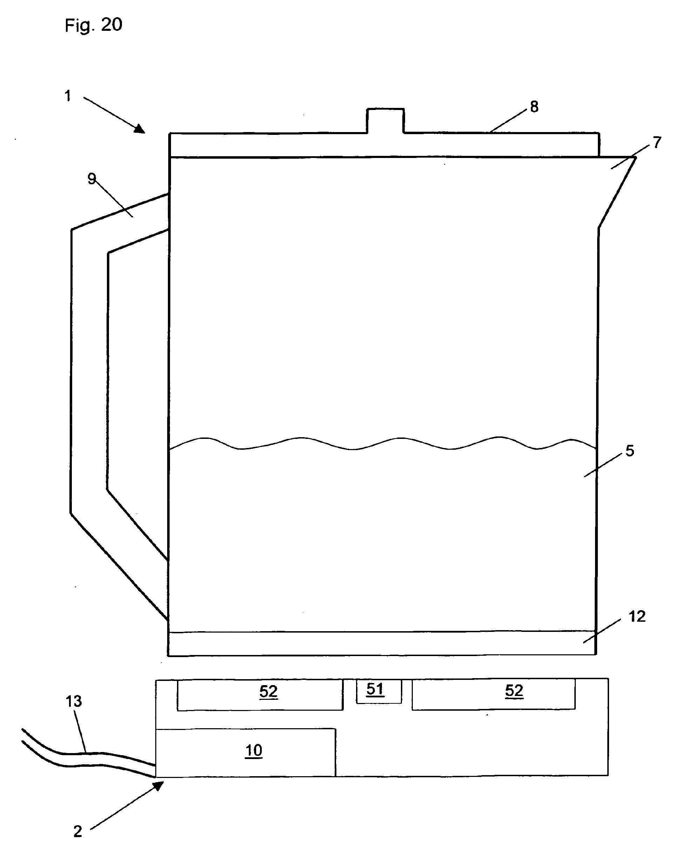

Figure 20 is a diagram of an inductively heated liquid heating vessel including a force sensor, in another embodiment of the invention.

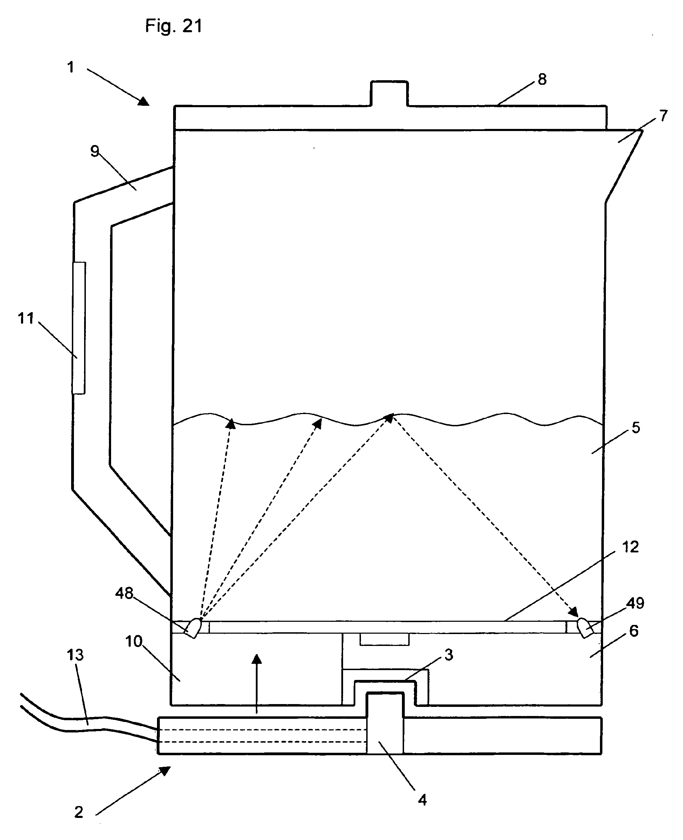

Figure 21 is a diagram of a liquid heating vessel including an optical boil detector, in another embodiment of the invention.

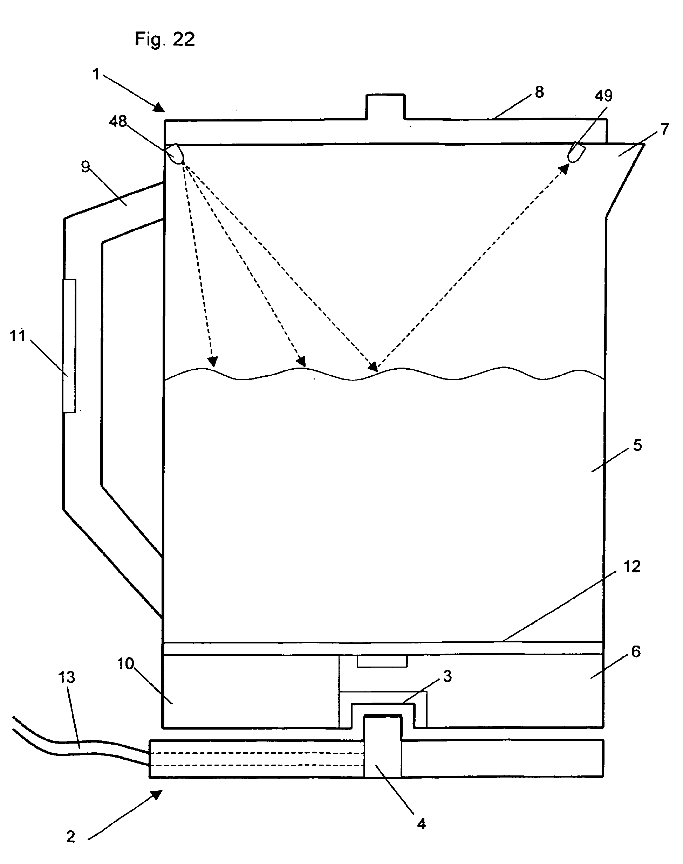

Figure 22 is a diagram of a liquid heating vessel including an optical boil detector, in another embodiment of the invention.

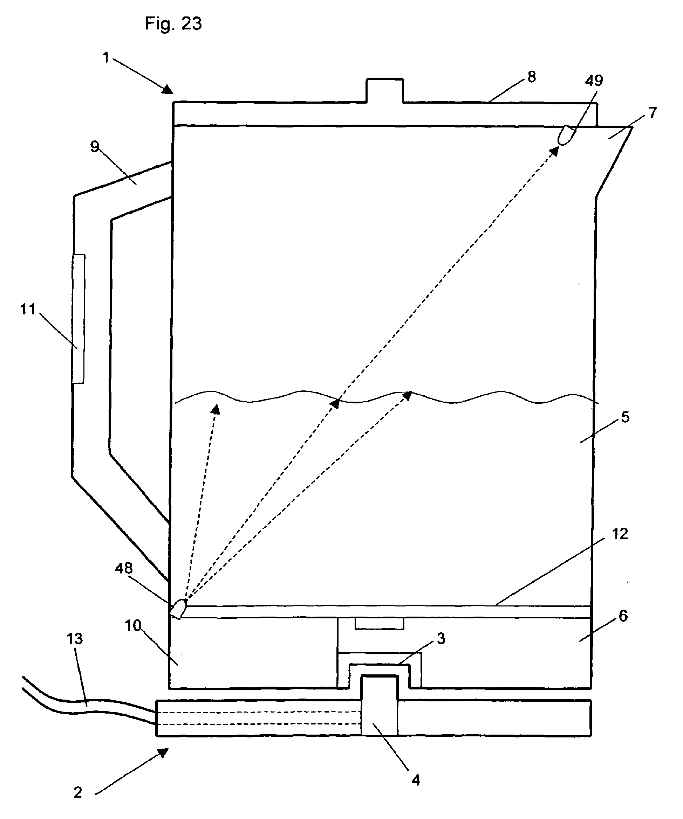

Figure 23 is a diagram of a liquid heating vessel including an optical boil detector, in another embodiment of the invention.

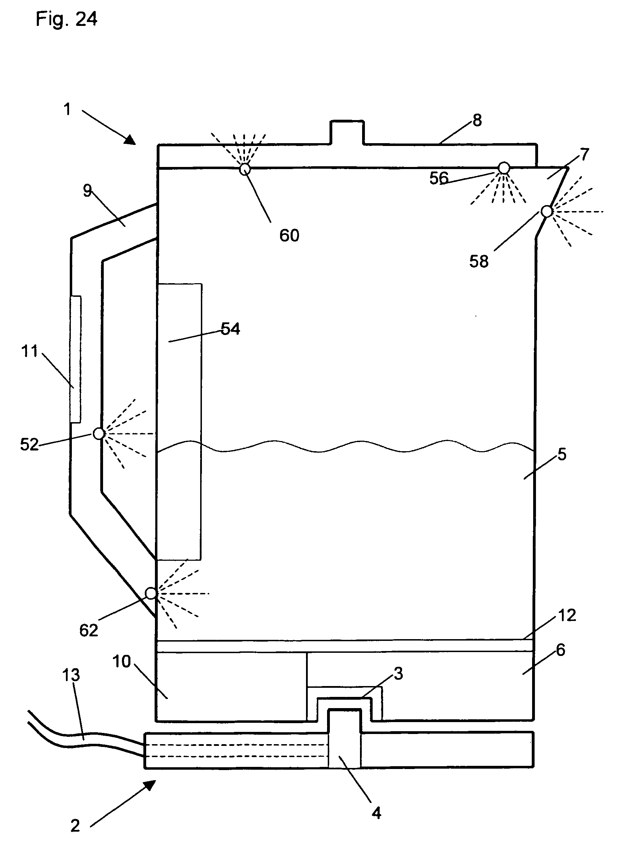

Figure 24 is a diagram of showing the arrangement of light sources according to embodiments of the invention.

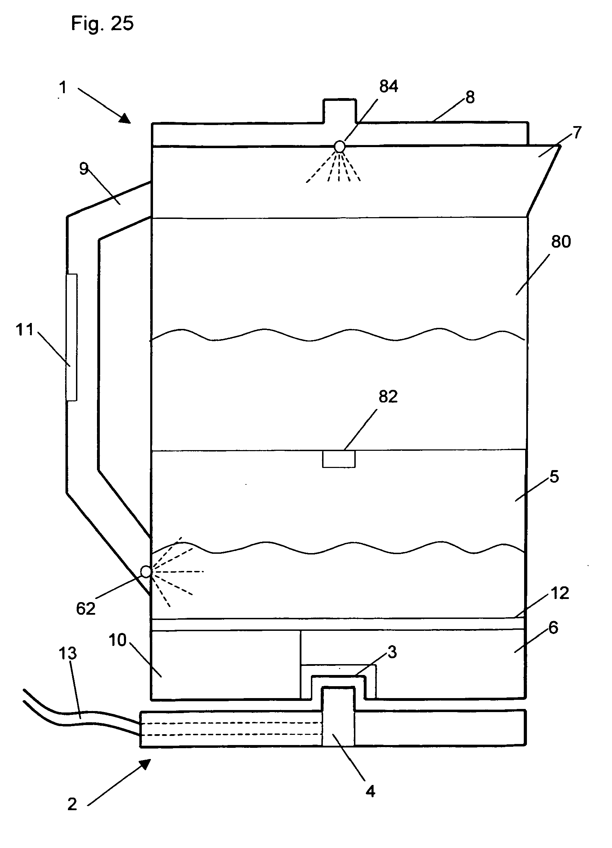

Figure 25 is a diagram of another embodiment of the invention, including a reservoir for dispensing liquid into the heating area.

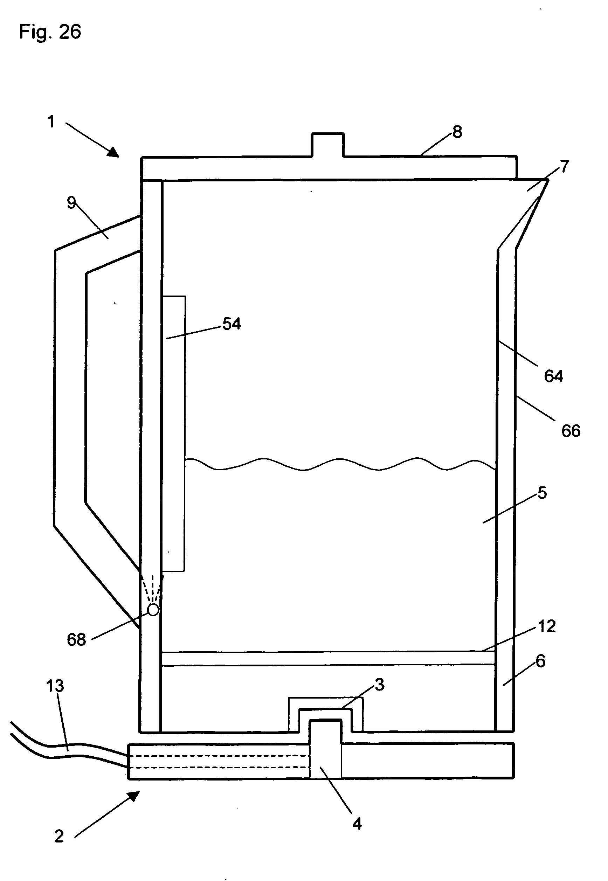

Figure 26 is a diagram of another embodiment of the invention, with a double-walled reservoir.

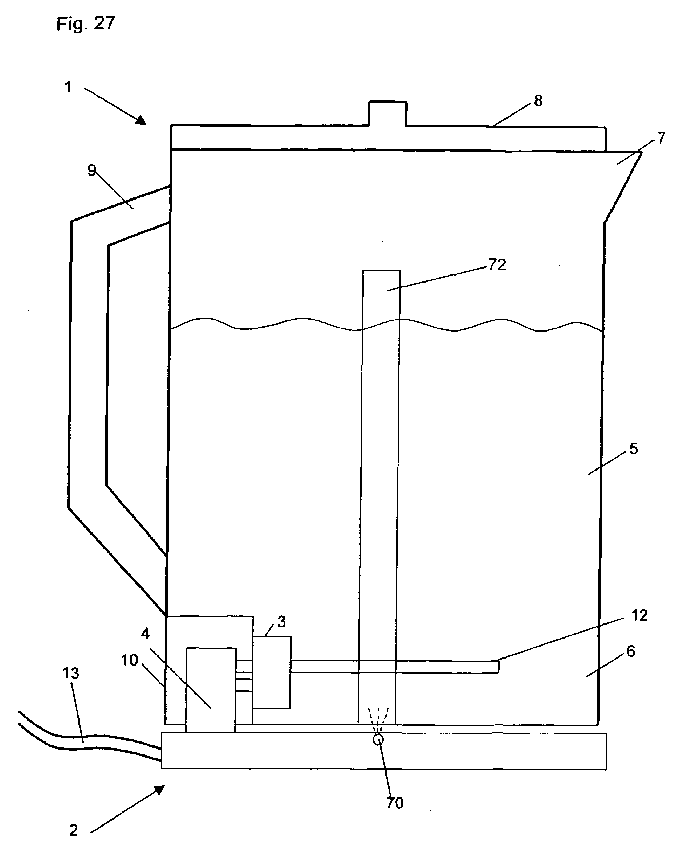

Figure 27 is a diagram of another embodiment of the invention, suitable for an immersed element kettle.

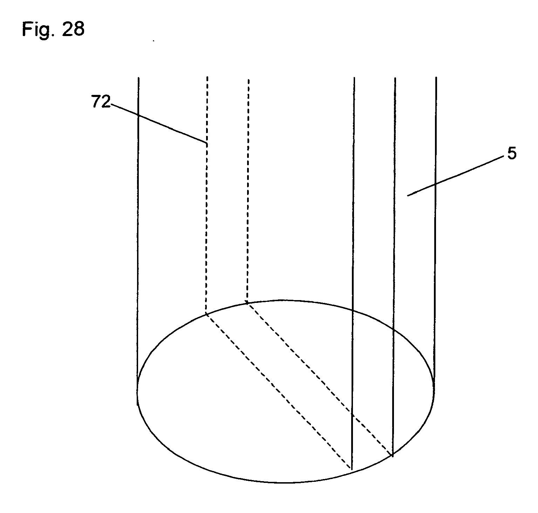

Figure 28 is a perspective view of the reservoir of the embodiment of Figure 28.

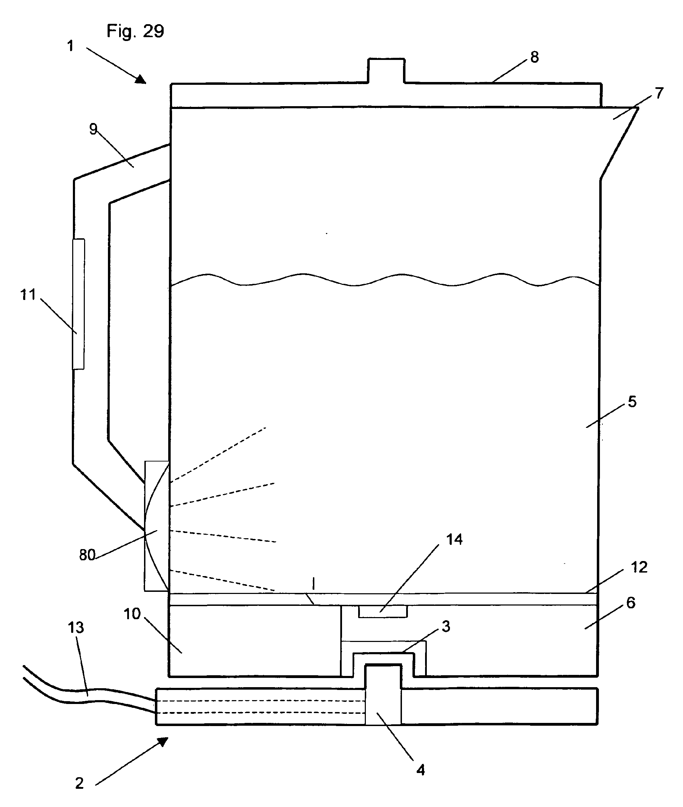

Figure 29 is a diagram of another embodiment of the invention, with a halogen keep-warm heater.

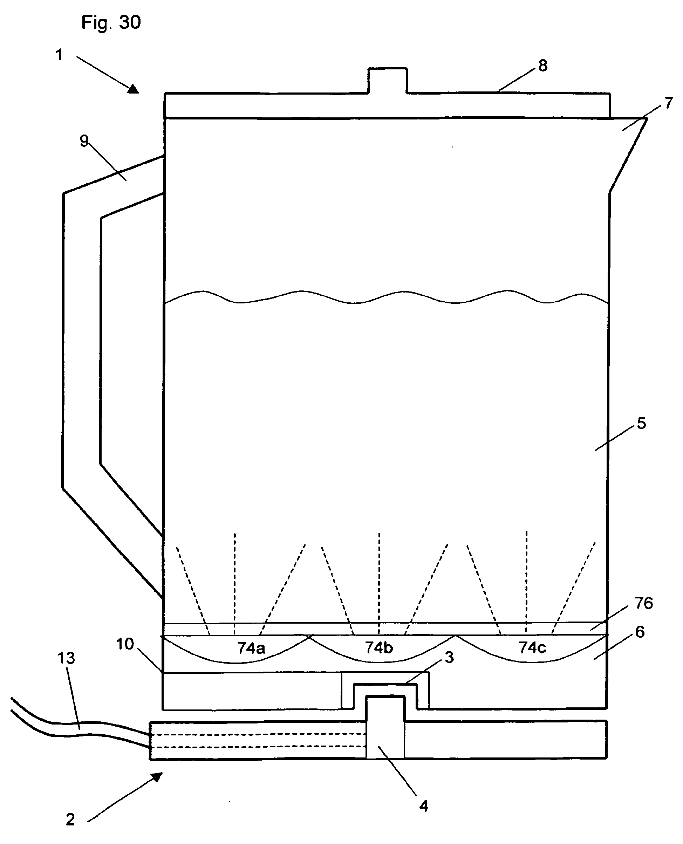

Figure 30 is a diagram of another embodiment of the invention, with an array of halogen lamps.

**Detailed Description of an Embodiment**

**Kettle Overview**

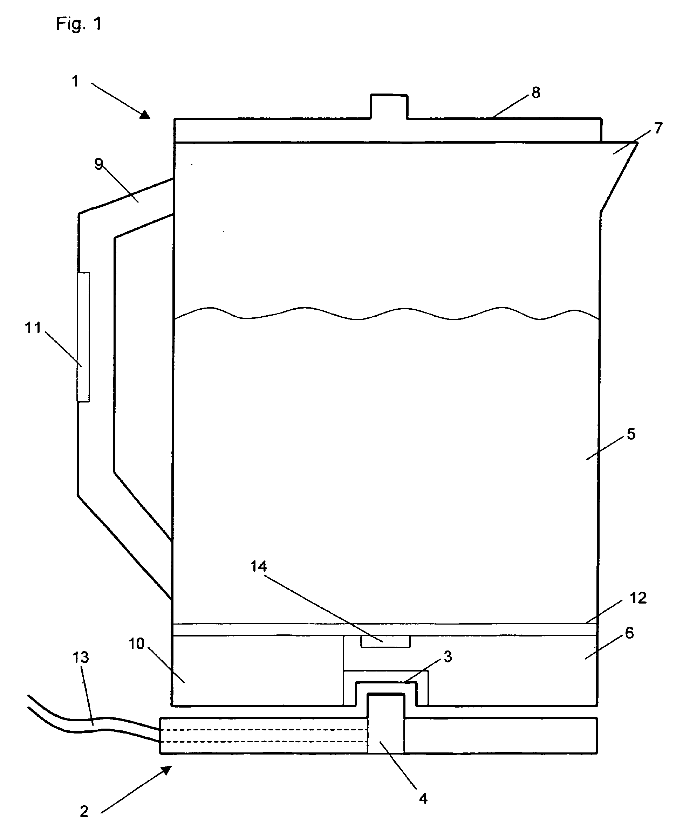

Figure 1 shows schematically a jug kettle with an electronic control, as an example of a liquid heating vessel to which embodiments of the invention may be applied. In this example, the kettle is a cordless kettle comprising a vessel body 1 and a power base 2 having respective body and base cordless connectors 3 and 4, such as 360° cordless connectors of the type described in patent publication WO-A-94/06185 and/or as sold by Otter Controls Ltd. under the CS4/CS7 (power base socket) and CP7 (appliance plug) references. The power base is connectable by a power cord 13 to an electrical power outlet (not shown).

The vessel body 1 comprises a reservoir 5 for containing water to be heated, and a base section 6, as well as a spout 7, a lid 8 and a handle 9. Water is heated by an element plate 12 forming the base of the reservoir 5, and including a heating element on the underside (i.e. facing towards the base section 6). The element plate 12 may be fitted into the vessel body using the Easifix (RTM) fitting as described in WO 99/17645. The element may comprise a sheathed element and/or a thick film element. Preferably, the  element plate is composed of stainless steel. Most preferably, the element plate is substantially as described in WO 06/83162. However, at least some embodiments of the present invention are applicable to liquid heating vessels having an immersed heating element, rather than an element plate.

The base section contains an electronic control 10 for controlling the operation state of the vessel, as will be described in more detail below. A user interface 11 allows the user to operate the vessel, and may provide a display of the operational state of the vessel. The control electronics may be divided between the user interface 11 and the control 10 as desired.

A sensor 14 is arranged to sense the temperature of water in the reservoir 5 through the element plate 12, and is preferably thermally isolated from the heating element. In this example, there is no steam tube to carry steam from the top of the reservoir 5 to the control 10, since boiling is detected from the input of the temperature sensor 14 rather than by sensing steam, as will be described in more detail below. In some of the embodiments described below, boiling is detected by means other than temperature sensing, so that the sensor 14 is not required.

The vessel may have one or more additional features, some of which are described in more details below. However, to avoid repetition, some of these features will be outlined here.

Additional heating features of the vessel may include a 'keep warm' feature, in which the liquid is maintained around a predetermined temperature, preferably after boiling; this may be done by intermittent activation of the main heating element, or by intermittent or continuous activation of a secondary heating element. The predetermined temperature may be just below boiling point, or a lower temperature such as 80°C, and may be selectable by the user.

Another heating feature is a sub-boil feature, in which the liquid is heated up to a predetermined temperature below boiling, such as 80°C for making coffee, and the heating power is then switched off or reduced, for example to activate a keep warm mode. The predetermined temperature may be selectable by the user.

Another heating feature is a prolonged boil feature, whereby the liquid is heated to boiling and then boiled for at least a predetermined time, such as 30 seconds to 2 minutes, to sterilize the liquid.

**Electronic Control Installation Details**

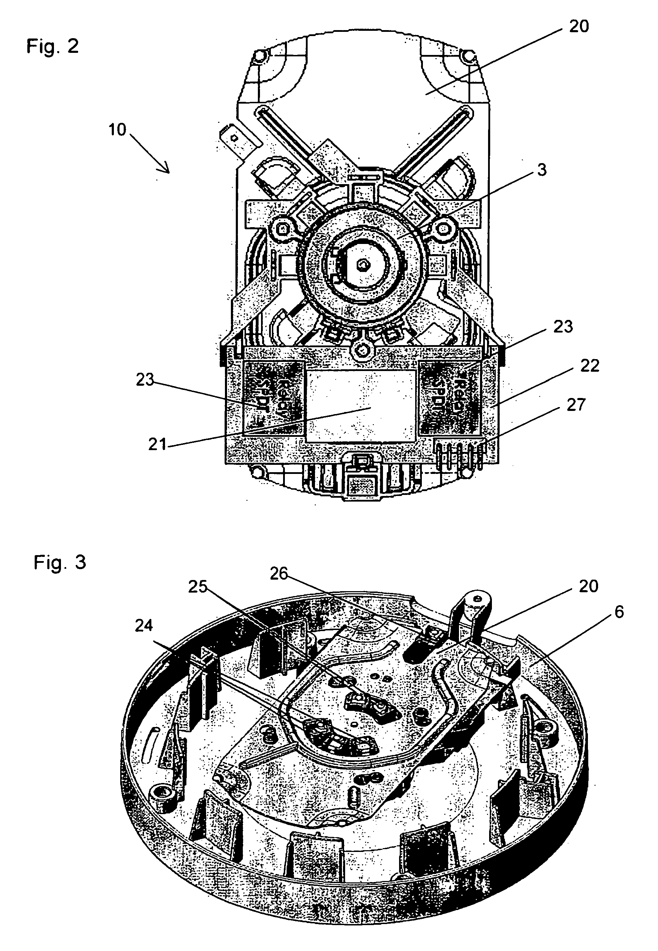

Figures 2 to 8 show a specific embodiment of the control 10 in various stages of installation. Figure 2 shows a power supply and switching board 22 on which are mounted a capacitor 21 and relays 23 together with a control connector 27. The board 22 is mounted on a metal chassis 20, on which the cordless connector 3 is also mounted. In this way, the cordless connector 3 is integrated with the board 22 to provide an integrated component.

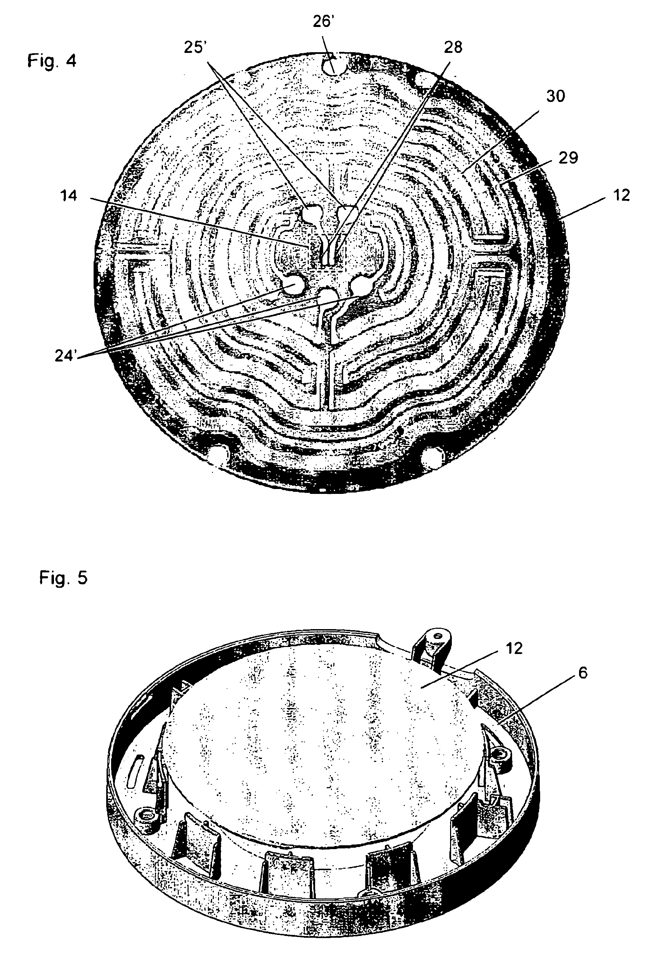

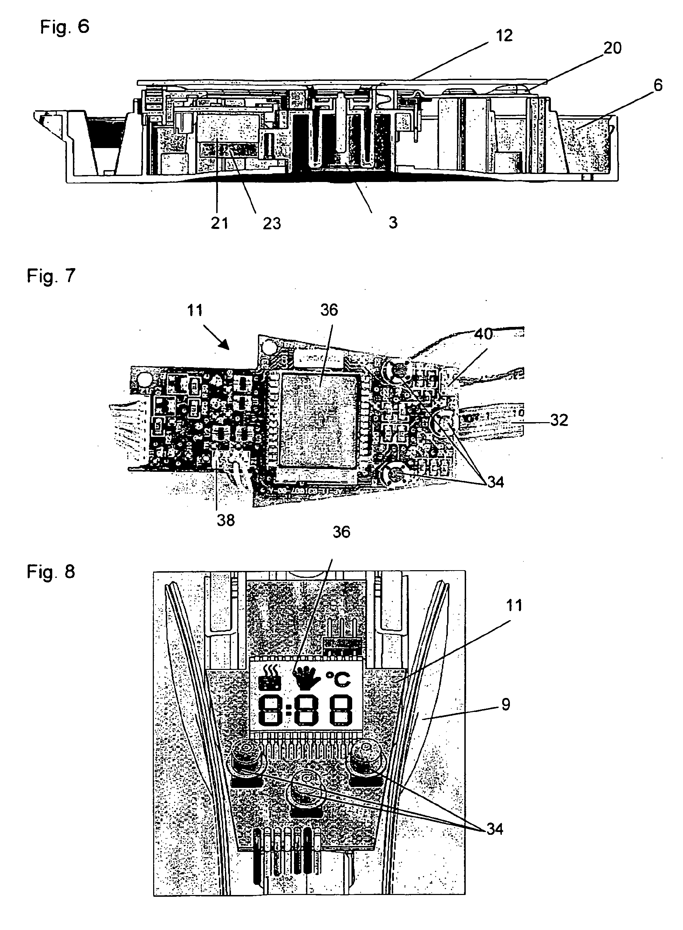

Figure 3 shows the chassis 20 inverted and mounted in the base section 6. The reverse side of the chassis 20 carries spring connectors comprising three power connectors 24, temperature sensor connectors 25 and an overheat sensor connector 26. As shown in Figure 4, the element plate 12 has corresponding power connection pads 24', temperature sensor connection pads 25', and overheat sensor connector 26' which make electrical contact with the corresponding connectors when the element plate 12 is located on the chassis 20, as shown in Figures 5 and 6.

The element plate 12 also includes temperature sensor mounting pads 28 to which the temperature sensor 14 (shown in dotted outline in Figure 4) is connected. The temperature sensor 14 is located in a central portion of the element plate 12 which is free from thick film heating tracks, so that the sensed temperature is close to that of the water during heating, although there is some heat conduction from the surrounding heating tracks to the sensor 14 via the element plate 12. The element plate 12 preferably comprises a stainless steel substrate and an insulating layer on which the heating tracks are deposited. The temperature sensor 14 preferably comprises an NTC thermistor.

The element plate 12 comprises a high power heating track 29 and a low power heating track 30, which are independently switchable via separate high and low power connection pads 24'. At 240 VAC, the high power track 29 is rated at 2073 W and the low power track at 1027W, giving a maximum power of 3.1 kW when both tracks are powered in parallel.

The overheat sensor connector 26' is used to detect leakage current which is indicative of an overheat condition of the element plate 12, as described in WO 06/83162. Hence, the control 10 can detect a dry boil condition and/or scale deposit.

Figure 7 shows the user interface 11 in this embodiment, which is connectable to the control connector 27 on the power and switching board 22 by a control cable 32. The user interface portion comprises user actuable buttons 34, and an LCD display 36, as well as a lighting connector 38 and an audio connector 40. As shown in Figure 8, the user interface 11 may be provided in the handle 9 so that the display 36 and buttons 4 are easily accessible to the user.

The user interface 11 includes a microprocessor arranged to control operation of the vessel by means of the power and switching board 22, in response to user control by means of the buttons 34. The microprocessor also controls the display 36, as well as lighting effects via the lighting connector 38 and audio via the audio connector.

The user interface 11 may be movably mounted so that its position or configuration can be altered to suit the user. For example, the display 36 may be pivotable and/or rotatable so that it is more easily visible when the vessel body 1 is separated from or connected to the base 2. The display 36 may be pivotable about a substantially vertical axis and mounted on the lid or upper surface of the vessel, so as to be configurable for left or right-handed operation.

### Electronic Control Circuit Diagram

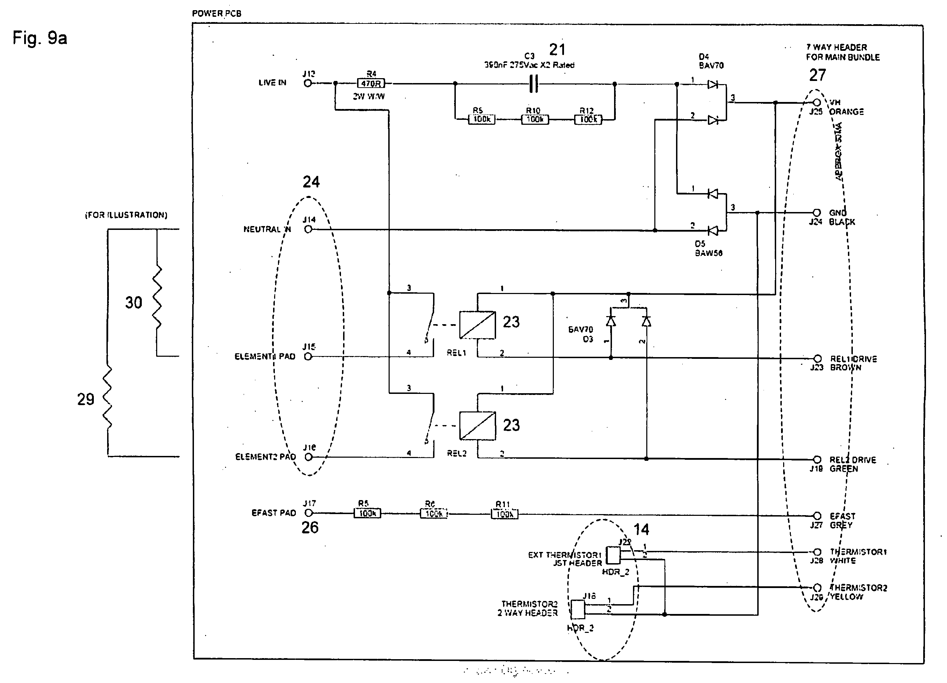

Figure 9a is a circuit diagram of the power supply and switching board 22, showing the connection of the relays 23 to the power connectors 24. The capacitor 21 forms part of a power supply that supplies a low DC voltage on the control connector 37 from the mains AC power.

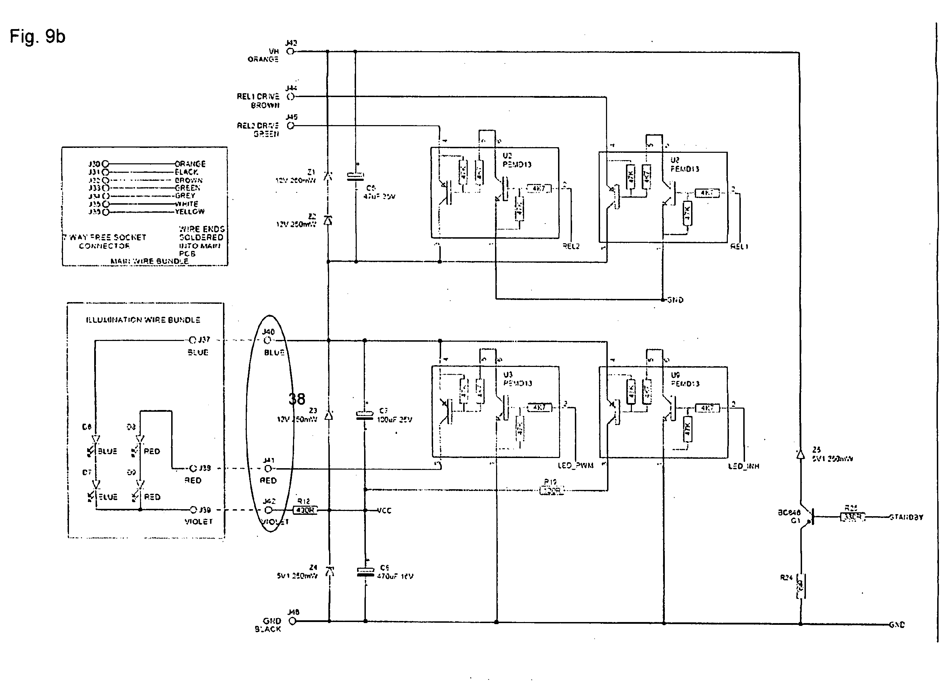

Figure 9b is a circuit diagram of an interface circuit for providing the voltages necessary to drive the relays 23 and the lighting connector 38. This interface circuit forms part of the user interface 11, although it could alternatively be located within the base section 6.

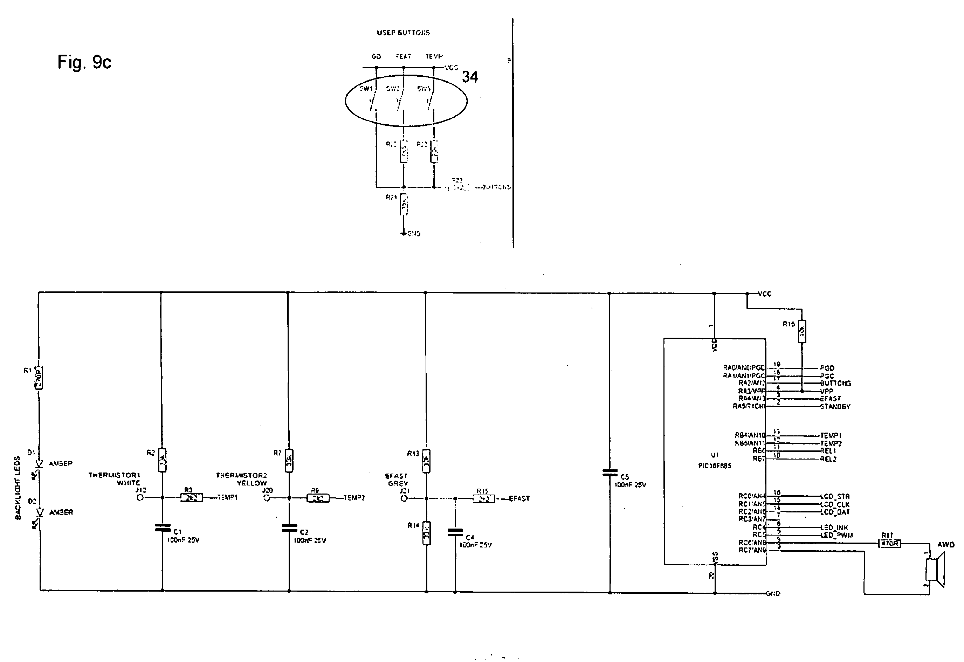

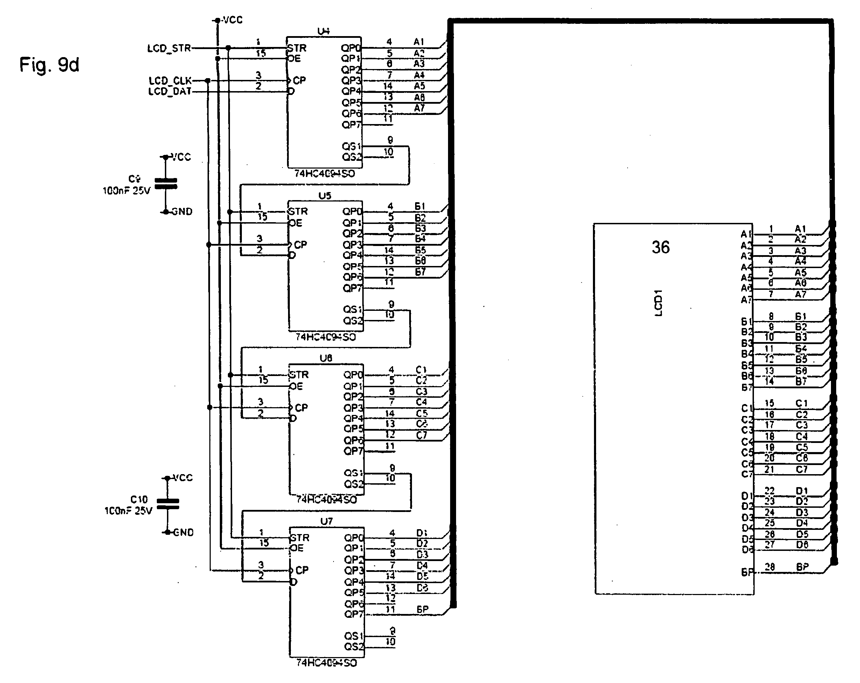

Figure 9c is a circuit diagram of the connection of the microprocessor to the temperature sensor and overheat sensor inputs. The diagram also shows the connection of the user actuable buttons 34. Figure 9d is a circuit diagram of the LCD driver circuit for driving the LCD display 36.

The microprocessor includes a program memory in which one or more control programs are stored for performing one or more control functions, as described below. The control program may be stored in program memory during manufacture. In one embodiment, the control program is stored in flash memory and may be updated via an interface to the microprocessor and/or the program memory. The interface may be an external interface such as a USB port, to allow programs and/or data to be transferred to the control. The external interface may be a wireless interface, such as a Bluetooth (RTM) interface.

The control is arranged so that the high-voltage circuits, such as the power supply and the relays, are formed within the base section, close to the element plate 12 and the cordless connector 3. Conversely, the low voltage electronic circuits form part of the user interface section, which is remote from the element plate 12. The low voltage electronic circuits are more susceptible to heat and moisture, so it is advantageous to locate them away from the base section 6.

In an alternative embodiment, at least the power switching components of the control are located in the power base 2 and are controlled via the cordless connectors 3, 4. For example, the control may send a low voltage pulse on the earth pin of the cordless connector 3, which controls the switch to toggle the power. In this way, signalling between the vessel body 1 and the cordless base 2 may be simplified. As another advantage, the power switching components are further removed from the control logic, so that the risk of interference is reduced.

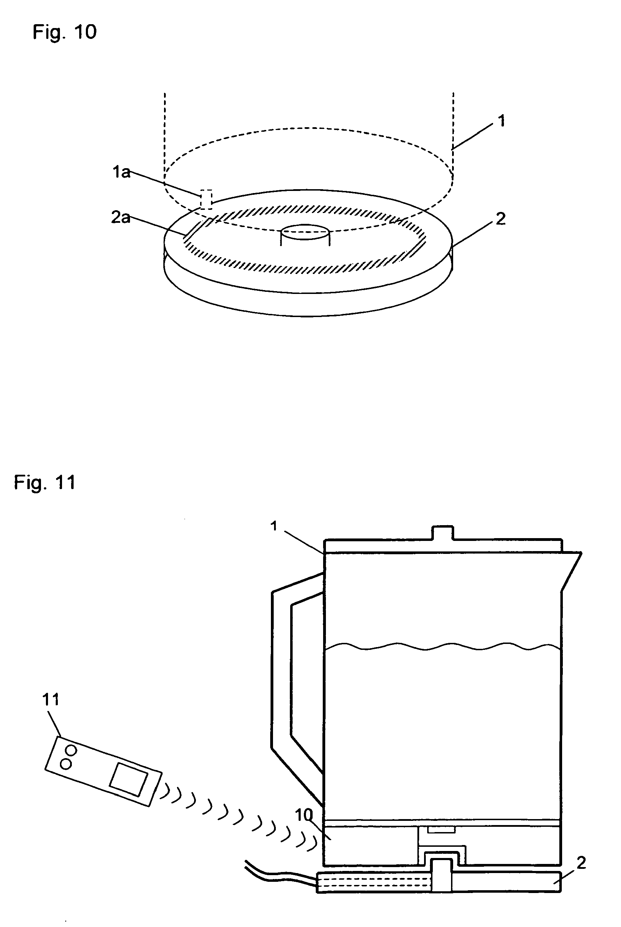

Data and/or signals may be communicated between the body 1 and the base 2 wirelessly, for example via infra-red or optical signalling. One of the body 1 and/or the base 2 may include a circular light guide 2a concentric with the cordless connector, with a corresponding infrared transmitter and/or receiver 1a at the same radius, as shown schematically in Figure 10, so that communication may occur regardless of the relative orientation of the body 1 on the base 2.

### Remote Control

In an alternative embodiment, as shown schematically in Figure 11, the user interface 11 may be provided as a remote control device, connected wirelessly to the control 10, for example by an infrared (IR), sonic, ultrasonic or radio frequency (RF) link. Known wireless technologies and/or protocols may be used for the wireless link, such Bluetooth®, or IR signalling protocols similar to those used in remote control devices for audiovisual equipment; in this way, the vessel may be controlled by a suitably programmed remote control device for audio or audiovisual equipment. For example, a person watching television need not get up to switch on the kettle, but may instead switch on the kettle using an existing television IR remote control, provided there is a line of sight to the kettle, or using an RF remote control. Where the vessel is remotely controlled by sonic signals, the user may switch on the kettle without the need for a remote control device, simply by whistling for example.

The use of a remote control user interface 11 for a liquid heating vessel has ecological advantages. For example, users often fill a kettle and set it to heat up or boil, in the expectation of needing hot water for cooking or making beverages in the near future. Much energy is wasted as the water cools down before it is needed, or is kept warm for too long. With a remote control, the user may switch on the kettle shortly before hot water is needed, while performing other tasks.

The user interface 11 may control heating functions in addition to switching the heating function on and off. For example, the user interface may control the target heating temperature and/or 'keep warm' temperature. The user interface 11 may control additional heating features of liquid heating vessel, as described above. The user interface 11 may control auxiliary features of the liquid heating vessel not directly involving heating, such as lighting effects. In a reservoir vessel, such as a filter kettle or an 'ECO' kettle as described in EP-A-1289395, the user interface 11 may control a valve for admitting water or other liquid from a reservoir into a heating chamber. The user interface 11 may control other functions, such as lid opening mechanisms, spout flaps, filling aids and pouring aids. Features of the remote control user interface are applicable to other appliances, such as coffee makers, flow-through heaters, teawakers and the like. The user interface 11 may be programmable and include a timer, so that the user can set desired actions at specific times.

The link to the user interface 11 may be bidirectional, so that information regarding the status of the vessel may be sent from the control 10 to the user interface 11. The status may be displayed to the user and/or used to trigger a further control signal by the user interface 11. For example, the user interface 11 may be programmed to activate a 'keep warm' mode or a prolonged boil or simmer mode after the liquid has reached the required temperature. In the prolonged boil or simmer mode, the user may set the duration of this mode; for example, the user may set a 1 minute prolonged boil for sterilization, or a 10 minute simmer for cooking, where the vessel body 1 is suitable for cooking foods in water or other liquid. A first alert may be sent to the user interface 11 when the liquid has reached boiling, and the interval timer may then be started by a further user actuation, for example after the user has added the food to the liquid. When the interval has expired, the user is alerted again to drain the cooked food.

As another example, the control 10 may detect whether the body 1 is connected to the base 2, or whether power is available, and indicate this status to the user interface 11 so that the user knows whether heating functions are available. As another example, the control 10 may indicate the level of liquid in the vessel, so that the user knows whether heating can be activated, or the vessel needs to be refilled. Other status or condition indications may include the sensed water temperature, the estimated time to reach target temperature (sub-boil or boil), whether the vessel needs descaling, whether the vessel has dry boiled, time since last filling etc.

The user interface 11 may be removably mountable on the vessel body 1 and/or the power base 2, and may be rechargeable by an electrical or inductive coupling thereto.

The control 10 may only be operable by means of the user interface 11, such that if the user interface 11 is removed, the control 10 is not manually operable; this may provide an advantageous child safety feature. Alternatively, the user interface 11 may be mountable over a manual actuator for the control 10, so that the latter is only accessible when the user interface 11 is removed. For example, the user interface 11 may provide touch-sensitive control, but may be removed if the user prefers mechanical control. Alternatively, the control 10 may be manually actuable independently of the user interface 11.

In an alternative embodiment shown in Figure 12, the remote control user interface 11 may be arranged to communicate with an intermediate module 11a that communicates in turn with the control 10. The intermediate module 11a may act as a simple relay between the remote control 11 and the control 10, or may provide additional data for the control 10, such as sensing barometric pressure, that do not require input from the user.

The intermediate module 11a may communicate wirelessly with the control 10, using a similar or different form of wireless communication to that used by the user interface 11. However, the intermediate module 11a may be a fixed installation and therefore may communicate with the control 10 using a wired connection, such as via mains signalling; this is particularly advantageous since the vessel must be connected to the mains in order to operate.

The intermediate module 11a may be arranged to communicate with one or more additional electrical devices other than the liquid heating vessel, such as lighting, heating or other devices. The intermediate module 11a may be a control hub for a wireless domestic control system.

In one specific embodiment, the intermediate module 11a is operatively connected to entertainment equipment to synchronise the operation of the vessel with the condition of the entertainment equipment. For example, the intermediate module 11a may detect that a commercial break in a television program is about to commence, and may automatically switch on the vessel so that the water therein is boiled approximately when the commercial break commences. This may be done by coupling the intermediate module 11a to the television receiver, so as to detect an embedded signal in the television programming indicating the approach of a commercial break; similar functionality is known in VCR's, for pausing recording during commercial breaks. Alternatively, the intermediate module 11a may retrieve electronic program guide data from the receiver, or from another source such as the Internet, determine when the currently watched program at the receiver is about to end, and activate a heating function of the vessel a predetermined time before the end of the program.

The intermediate module 11a may communicate with the user by other means than via the user interface 11. For example, the intermediate module 11a may communicate with an entertainment system to notify the user of a specific state or condition of the vessel. In one example, the intermediate module 11a creates a short signal that generates audible or visible interference at the entertainment system, so as to alert the user, or generates a low power radio signal that is output as an audible message by a radio receiver. In another embodiment, the intermediate module 11a may send a text message or email to notify the user, via a corresponding SMS or email interface within the module 11a.

In an alternative embodiment, the intermediate module 11a may contain the control 10 for the vessel, and may receive information from one or more sensors in the vessel and send commands to switching circuitry within the vessel body 1 and/or the power base 2. In other words, the intermediate module 11a is arranged to sense remotely properties of the vessel and/or its contents, and to control the switching state thereof. For example, the vessel may contain a temperature sensor which transmits a signal representing the sensed temperature. Alternatively, the intermediate module 11a may include a remote sensor, such as an infrared sensor or force sensor as described below, which senses the condition of the vessel, such as the temperature of a part of the vessel or agitation of the liquid within the vessel.

The intermediate module 11a may determine a boil or sub-boil condition of the vessel from the sensed temperature, and control the heating state of the vessel in response to the determined condition thereof. The intermediate module may include a control program, such as described in the section Boil Detection and/or Sub-boil Temperature Detection below. The intermediate module 11a may be reprogrammable, for example by loading an updated control program via a local network connection or via the Internet.

As shown in Figure 13, the intermediate module 11a may be provided in a mains plug for connecting the vessel to mains power, or in an adaptor module connected between the mains plug and the socket, and may switch power to the vessel. In this case, the intermediate module 11a may communicate with the control 10 through the mains cable between the module 11a and the control, either by signals transmitted through the mains wiring, or via a separate electrical or optical connection within the mains cable sheath. This arrangement of the intermediate module may be retrofitted to an existing vessel with little or any modification to the vessel, or may be used with a vessel having very few electrical or electronic components fitted within the vessel itself.

Providing the user interface 11 as a remote control unit provides greater choice in the design of user interface 11. For example, the user interface 11 may be designed for operation by a disabled user, for example with large buttons for users with poor motor skills or Braille labels for visually impaired users. Thus, users may choose a user interface 11 to suit their needs, without the need for the manufacturer to provide different vessels for different user interface requirements.

**Distribution of Functions between Components**

In the above embodiments, examples are given of how different functions of a liquid heating vessel may be distributed between different components of the vessel. These are only examples, and a more general discussion will now be presented of possible distributions of functions among components in embodiments of the invention.

The basic functions for the electronic control of a liquid heating vessel may comprise:

i) a user control interface allowing the user to control the operation of the vessel;

ii) sensing means for sensing the condition of the vessel, such as the temperature of the liquid therein;

iii) switching means for switching the heating state of the vessel, such as switching primary heating on and off; and

iv) a control for receiving inputs from the user interface and the sensing means, and controlling the switching means in response to those inputs.

Further optional functions of the liquid heating vessel include:

v) a status display for displaying the state of the vessel and/or the liquid, in response to a status output from the control;

vi) additional switching for additional heating functions of the vessel, such as keep warm heating; and for additional non-heating functions, such as illumination.

Apart from the vessel body 1, the liquid heating vessel may comprise one or more of the following optional discrete components:

a) the cordless power base 2, which may comprise a 360° connector

b) the remote control unit 11; and

c) the intermediate module 11a.

Possible distributions of these functions, according to embodiments of the present invention, are identified in Table 1 below:

**Table 1**

| Function<br>Component | user control | sensing | switching | control | status display | additional switching |
|---|---|---|---|---|---|---|
| body 1 | Yes | Yes | Yes | Yes | Yes | Yes |
| power base 2 | Yes | Yes | Yes | Yes | Yes | Yes |
| module 11a | Yes | Yes | Yes | Yes | Yes | No |
| remote 11 | Yes | No | No | Yes | Yes | No |

The user control and/or status display may be provided in any one or more of the components, although if the remote 11 is present, it must contain at least one of these functions. Sensing and switching are not practicable for the remote 11, as this needs to be mobile with respect to the vessel body 1. The control logic may be implemented in any one or more of the components, and may be distributed between the components. Switching of additional vessel functions may only be performed within the power base if there is a separate power supply for the additional functions from the power base 2 to the vessel body 1.

**Auxiliary Power Supply**

A power source, such as a battery or capacitor, may be provided in the vessel body 1 to provide power to the electronic circuits when the vessel body 1 is removed from the power base 2. Preferably, the power source is rechargeable and is recharged when the vessel body 1 is connected to the power base 2. Additionally or alternatively, the power source may be charged when the vessel body is not connected to the power base 2, for example by a photovoltaic panel on the vessel body 1. The power source may preserve the state of at least some parts of the electronic control 10, and may be sufficient to power lighting or other effects as described below. Preferably, the user may operate the user interface 11 while the vessel body 1 is removed from the power base, for example to change settings such as control settings and/or lighting. The user interface 11 may be operable in a demonstration mode, to demonstrate non-heating features of the vessel when the vessel is not plugged into the mains. In that case, the vessel should preferably be chargeable without a mains connection, such as by means of a photovoltaic panel, or the power source should be renewable.

**Standby Mode**

To save power, the electronic control 10 may enter a standby mode when the vessel body 1 is separated from the base 2 for more than a predetermined interval. In standby mode, the power drain may be reduced by switching off lighting and/or disabling features of the user interface 11. The vessel body 1 may leave standby mode in response to being reconnected to the base 2 and/or in response to user control via the user interface and/or in response to other inputs, such as from a user proximity sensor.

Alternatively or additionally, when the vessel body 1 is separated from the base 2 the electronic control 10 may enter a mode that is not a low power mode, but is intended to encourage the user to replace the vessel body 1 on the base 2. For example, the control 10 may detect the charging level of the power source within the vessel body 1, and issue an alert to the user when the charging level is below a predetermined level. Alternatively, the control 10 may alert the user when the vessel body 1 has been separated from the base 2 for more than a predetermined interval, to ensure that the vessel body 1 is not misplaced or unavailable when the user next wants to use the vessel.

**Boil Detection**

In one embodiment, a boil detection control program is arranged to perform the algorithm shown in Figure 14. At an initial boil operation (S1), for example the first boil operation that is performed by the user, the water is heated until boiling is detected (S2) using an initial boil detection algorithm. One such algorithm measures the rate of temperature rise of the water, and detects boil when the rate falls below a predetermined value, as described for example in GB-A-2228634. This algorithm gives a reliable indication of boiling, but is comparatively unresponsive.

The present inventors have found that the sensor temperature recorded when the rate of temperature rise falls below the predetermined value varies with the rate of temperature rise during heating: when the rate of rise is low, for example because of a large water volume or a low power input, the recorded sensor temperature at boiling is lower than when the rate of rise is high. One possible reason for this is illustrated in Figure 15, which shows the water temperature (measured by thermocouples within the water) and NTC sensor temperature at three different rates of temperature rise; in this case when heating 500 ml, 1100 ml and 1700 ml of water to boiling. At a high rate of rise, the sensor temperature lags behind the water temperature, while at a low rate of rise, the water temperature lags behind the sensor temperature; this is due to the thermal inertia of the heating element relative to the thermal inertia of the water being heated.

In this embodiment, the average rate of temperature rise is determined between the starting temperature and a predetermined temperature, such as 90°C. Boiling is then detected when the rate of temperature rise falls below 0.1 °C/s, and the boiling temperature $T_B$ is then recorded. The measured boiling temperature $T_B$ varies according to the volume of water in the vessel, which is approximately inversely proportional to the average rate of temperature rise up to the predetermined temperature, assuming constant heating power and negligible heat loss. The boiling temperature $T_B$ is therefore adjusted for a nominal average rate of temperature rise corresponding to a nominal volume of water, and the adjusted temperature is recorded as the boil reference temperature $T_{BR}$ (S3). Optionally, the boil reference temperature $T_{BR}$ may be reduced by a small amount, such as 1°C, to compensate for the delay in the initial boil detection algorithm.

Alternatively, the user may be required to fill the vessel with the nominal volume of water for the initial boil operation, in which case the boiling temperature is taken as the boil reference temperature $T_{BR}$ without adjustment. However, this approach relies too much on the accuracy of the user, and is less preferred.

In a subsequent boil operation (S4), the average rate of temperature rise up to a predetermined temperature is measured as $\Delta T/\Delta t$, where $\Delta T$ is the difference between the start temperature and the predetermined temperature (such as 90°C), and $\Delta t$ is the time taken to reach the predetermined temperature from the start temperature. A target boil temperature $T_T$ is then calculated (S6) as a function of the boil reference temperature $T_{BR}$ and $\Delta T/\Delta t$, to compensate for the difference between $\Delta T/\Delta t$ and the nominal average rate of temperature rise corresponding to the nominal volume of water.

Next, the program checks whether boil is detected according to the initial boil detection algorithm (S7). If so, then a boil condition is determined (S9). If not, the program checks whether the measured temperature T has reached the target boil temperature $T_T$ (S8) and if so, the boil condition is determined (S9); otherwise, heating continues and the boil detection algorithms are repeated (S7, S8) until the boil condition is determined (S9).

When the boil condition is determined (S9), heating may be terminated or reduced, for example to keep the water warm at a temperature below boiling, to boil the water at reduced power for a predetermined period for sterilization, or to simmer the water or other liquid in the vessel.

The boil detection algorithm based on the target temperature $T_T$ (S8) is more responsive than the initial boil detection algorithm (S2, S7), since the latter depends on temperature measurement over a period of time in order to determine when the rate of rise has fallen below the threshold; this period of time should be long enough to achieve reliable boil detection, even for the maximum volume of water and/or low heating power, when the rate of temperature rise is at its lowest. However, the initial boil detection algorithm is included for subsequent boil operations (S7) as a check in case the target temperature $T_T$ algorithm fails. This may occur if the atmospheric pressure has reduced since the boil reference temperature $T_{BR}$ was measured, for example if the vessel has been taken to a higher altitude.

To overcome this problem, the boil detection control program may adjust the boil reference temperature $T_{BR}$ after a boil condition is determined (S9). The program compares the actual temperature $T_B$ at which boil was determined with the target temperature $T_T$. If $T_B < T_T$, for example because boil was detected by the initial boil detection algorithm first (S7), then the boil reference temperature $T_{BR}$ is decreased by a small predetermined quantity, such as 0.05°C.

In an alternative, information about the ambient pressure and/or altitude of the vessel may be input to the control, for example by entering the information via the user interface 11 or intermediate module 11a, or by inputting data from an external device via the external interface, such as from an electronic barometer or from a GPS device.

Another problem arises when scale begins to build up on the element plate 12, which causes a gradual increase in the temperature measured by the sensor 14 when the water reaches boiling. Hence, the measured temperature reaches the target temperature $T_T$ earlier than predicted for the measured rate of temperature rise, and the target temperature algorithm $T_T$ may detect a boil condition prematurely.

In a modification of the boil detection algorithm based on the target temperature $T_T$ (S8) as shown in Figure 14, the average rate of temperature rise $\Delta T/\Delta t$ is used to calculate the time $\Delta T_1$ to increase the water temperature by a first predetermined amount $\Delta\theta_1$, such as 2°C. This may be done as an additional part of step S6. When the measured temperature is less than the target temperature $T_T$ by a second predetermined amount $\Delta\theta_2$ less than the first predetermined amount, such as 1°C, the program sets a timer for the interval $\Delta T_1$. Thus, the condition at step S8 becomes $T > T_T - \Delta\theta_2$. and the timer is set if the condition is satisfied. The boil condition is determined (S9) in response to expiry of the timer; in other words, the boil condition is determined an interval $\Delta T_1$ after the condition at step S8 is satisfied.

In this modification the actual boil temperature $T_B$ may be higher than the target temperature $T_T$, for example because of scale accumulation on the element plate 12. If $T_B > T_T$, the boil reference temperature $T_{BR}$ is increased by a small predetermined quantity, such as 0.05°C. This allows the program to track the effect of scale deposit. Furthermore, the current value of the boil reference temperature $T_{BR}$ may be used to detect excessive scaling: if the boil reference temperature $T_{BR}$ exceeds a predetermined threshold, then a scale warning may be indicated to the user or an automatic descaling process may be initiated, for example as described below.

After the user has descaled the vessel, the boil reference temperature $T_{BR}$ may be too high, and the initial boil detection algorithm may detect boiling before the target temperature algorithm i.e. $T_B < T_T$. The boil reference temperature $T_{BR}$ will then be decreased by a small predetermined quantity, such as 0.05°C after each boil operation until $T_B > T_T$. Alternatively, the control program may decrease the boil reference temperature $T_{BR}$ by a larger quantity if $T_B$ is significantly less than $T_T$, so that the control program adjusts more quickly to descaling.

As an alternative to progressively changing the value of $T_{BR}$, the value of $T_{BR}$ may be reset, for example by performing a new initial boil operation (S1) and calculating the new value of $T_{BR}$ from the boil temperature $T_B$ (S2, S3). The reset may be performed periodically, such as after every 1000 heating operations, or in response to a user actuation.

An important advantage of this algorithm is that there is no need to determine the volume of liquid being heated; the rate of temperature rise during heating is measured, but this is a function of both the volume of liquid and the heating power. The latter may vary depending on the line voltage, but there is no need to measure these variations. Hence, this algorithm may provide accurate boil detection without determination of liquid volume.

**Sub-boil Temperature Detection**

In another embodiment of the present invention, there is provided a control program for heating the liquid up to a predetermined temperature lower than boiling. The predetermined temperature may be a fixed temperature, such as 80°C which is suitable for brewing coffee, or may be set by the user at a desired temperature.

When liquid is heated from ambient temperature in a liquid heating vessel, the liquid is not thoroughly mixed until it reaches boiling point. For example, in a jug kettle that has heated water up to an average temperature of 60°C, the local water temperature may vary by as much as 20°C, whereas at an average temperature of 95°C the local variation may have fallen to 5°C. Hence, measuring average water temperature for a sub-boil temperature presents problems that do not exist for temperatures close to boiling. In particular the sensor 14, which is located at the bottom of the column of water in the reservoir 5, will sense a temperature higher than the average temperature of the water.

For a given liquid heating vessel, the local temperature variation is dependent on the volume of liquid in the vessel. For a smaller volume, the temperature variation will be less. For a given measured temperature at the bottom of the vessel, the average temperature will therefore be higher for a smaller volume.

In this embodiment, the volume of liquid is determined indirectly by measuring the rate of temperature rise, which is approximately inversely proportional to volume for a constant heating power. The rate of temperature rise $\Delta T/\Delta t$ is measured as the liquid is heated from a starting temperature to a temperature below the desired sub-boil temperature for the water. The target sensor temperature is then adjusted according to the measured rate of temperature rise $\Delta T/\Delta t$, so that the average temperature corresponds to the desired sub-boil temperature when the measured sensor temperature reaches the target temperature. Heating is then terminated, or reduced to keep the water at the desired sub-boil temperature. In the latter case, the sensor temperature may change as the water becomes more thoroughly mixed and the sensor temperature approaches the average temperature of the water.

The initial water temperature before heating may have an effect on the actual average water temperature when the sensor temperature reaches the target sensor temperature, adjusted as described above. Hence, in a variation of this embodiment, the initial water temperature is measured and the target sensor temperature is adjusted according to the measured initial water temperature.

**Keep Warm Temperature Control**

After the water has been heated to boiling, or to the desired sub-boiling temperature, the heater may be controlled to maintain the water around the desired temperature, whether just below boiling or the desired sub-boiling temperature. In keep warm mode, the control program may switch the element on when the measured water temperature falls a predetermined amount below the desired temperature, until the desired temperature is reached. The target temperature $T_T$ corresponding to the desired temperature may be adjusted according to the rate of rise of the water temperature $\Delta T/\Delta t$ as the water is reheated, similarly to the boil and sub-boil detection algorithms described above.

The keep warm mode may be maintained indefinitely, until the user switches it off. Alternatively, the control program may switch off the keep warm mode automatically after a predetermined period, such as 30 minutes.

The keep warm mode may be used as a simmer control, to maintain the liquid around boiling without producing a fast, rolling boil. This simmer control may be applied to liquid heating vessels other than kettles, which are suitable for cooking.

**Sterilization Control**

The control program may be operated in sterilization mode, in which the water is boiled for a predetermined period (such as 15 seconds). In this mode, it is not essential to use the target temperature algorithm to detect boiling, as a prolonged boil is required and a rapid response to boiling is unnecessary. Instead, the initial boil detection algorithm may be used. A timer is set for the predetermined period, and the heater is then switched off.

The sterilization control mode may include a desired temperature indication mode. After the heater is switched off, the water cools and the control program senses the water temperature until it reaches a target temperature corresponding to the desired temperature, at which point the control program provides an indication to the user that the desired temperature is reached. Additionally, the control program may then enter the keep warm mode to keep the sterilized water at the desired temperature. The user may select the desired temperature indication mode and/or the keep warm mode in addition to the sterilization mode.

## Override Mode

Mechanical sensors such as snap-acting bimetals are generally arranged to reset quickly after activation; for example, a bimetal used as a dry boil sensor is typically arranged to be in good thermal contact with an element plate until activated, at which point the bimetal snaps out of contact with the element plate, and is therefore able to cool down and reset quickly. A bimetal used as a steam sensor may be arranged in a steam chamber or adjacent the outlet of a steam tube. When the steam sensor is activated, steam is no longer generated and so the quantity of steam around the sensor decreases rapidly; the sensor therefore cools and resets quickly.

In some embodiments of the invention, the sensor 14 is an electrical or electronic sensor and does not move out of thermal contact with the element plate 12 when the target temperature or dry boil condition is detected. Hence, the sensed temperature remains high for some time after power to the element plate 12 is switched off or reduced, due to the thermal inertia of the element plate 12, unlike the rapid cooling of mechanical sensors.

In some cases, it is desirable to allow the user to reactivate power to the appliance, for example to force reboiling of liquid in the reservoir 5, when the sensed temperature is still above the target temperature $T_T$. The target temperature algorithm cannot be used to control reheating or reboiling in these circumstances, since the sensed temperature is still above the target temperature $T_T$. Instead, the control 10 enters an override mode in response to user actuation to reheat the liquid when the sensed temperature is still above the target temperature $T_T$. In the override mode, the control 10 switches on or increases heating power for a predetermined time, such as 10 seconds, and then switches off or reduces power. The override mode also has the benefit of reassuring the user that the vessel is still operational; otherwise, a user accustomed to the rapid resetting of manual sensors may assume incorrectly that the vessel is faulty.

## Volume/Level Detection

The volume of water in the reservoir 5 may be detected by means, as described below.

In one embodiment, as shown in Figure 16, the control 10 is connected to a series of reed switches 42 at approximately equally spaced heights within a vertically extending tube 46 within the reservoir 5. A magnetic float 44 is slidably mounted on the outside of the tube 46 to actuate the reed switch or switches 42 closest to the float. In this way, the control 10 may determine the liquid level, and hence derive the volume of liquid in the reservoir, by determining which reed switches are actuated.

In a liquid heating vessel arranged to detect boiling by sensing the presence of steam, the tube 46 may be a steam tube for conveying steam to the control 10.

Alternatively, the reed switches 42 may be arranged within the wall of the reservoir 5, or outside the wall but within a housing, such that they can still be actuated by the magnetic float 44.

Alternatively, the reed switches 42 may be replaced by sensors within the reservoir 5, such as electrodes that are able to detect whether they are immersed, in which case there is no need for the magnetic float 44. Alternatively, capacitive level sensors may be used.

In another embodiment, the liquid level is sensed by means of a pressure sensor at or near the bottom of the reservoir 5. As the liquid level increases, so does the sensed pressure, from which the liquid level is derived.

In another embodiment, the liquid level or volume is detected by sensing the electrical resistance of the liquid in the reservoir 5. Assuming the conductivity of the liquid is constant, the resistance of the liquid as a whole will decrease as the level or volume increases. The resistance may be measured between electrodes, one of which is preferably arranged at the bottom of the reservoir 5. Alternatively, liquid level or volume is detected using a capacitive sensor or sensors.

In another embodiment, as shown in Figure 17, the liquid level is sensed by an ultrasonic transducer 48 coupled to the element plate 12. Ultrasonic pulses are reflected off the surface of the liquid and are detected by the transducer 48. The control 10 measures the time taken for the pulses to be reflected off the surface and thereby calculates the distance of the surface from the element plate 12 and therefore the liquid level. Alternatively, the transducer 48 could be located above the surface of the water, such as in or adjacent to the lid 8, and the level of the surface thereby determined and used to calculate the liquid level.

In an alternative embodiment, the control 10 varies the frequency of the ultrasonic transducer and determines the amplitude of the reflected signal at the different frequencies and hence a resonant frequency or frequencies. The reflection of the ultrasound between the element plate 12 and the surface will determine a resonant frequency in the liquid having a wavelength that is a function of the distance between the surface and the element plate. The speed of sound in water is approximately 1500 m/s, therefore a frequency above 20 kHz will give a wavelength of 7.5 cm, which is comparable to the depth of water in a kettle. The control 10 therefore derives the liquid level from the resonant frequency or frequencies.

The resonant frequency may alternatively be a resonant frequency of part or all of the vessel body 1, such as the resonant frequency of the walls. The amplitude of the resonance will be damped according to the volume of water in the vessel. Hence in an alternative embodiment the frequency of the ultrasound is fixed, and the amplitude of the resonance is detected to determine the water level or volume. As an alternative to the ultrasonic transducer, an electrical signal at an ultrasonic frequency may be passed through the heating element itself, or through a separate track on the element plate; the electrical signal interacts with the earth's magnetic field to cause ultrasonic vibrations within the element plate. It has been observed that passing 50 Hz mains current through a thick film element can cause audible vibration of an element plate; this effect, which is normally considered as a nuisance to be avoided, is harnessed in the present embodiment by the use of ultrasonic signals.

As an alternative to the ultrasonic signal, an electromagnetic signal such as a light signal may be used; the light may be laser light. The electromagnetic signal may be emitted as a short pulse, or series of pulses, which is reflected off the surface of the liquid and detected by a photodetector. The time of flight may be measured using conventional components such are used in laser distance meters, and used to calculate the liquid level.

In one embodiment, as shown in Figure 18, a distance-measuring device 48 is situated at or around the top of the reservoir 5. The device may be a laser or ultrasonic distance measuring device. The distance-measuring device 48 may be positioned substantially on the central vertical axis of the reservoir 5, so that the accuracy of the water level accuracy measurement is not dependent upon the vessel body 1 being vertical. Alternatively, there may be provided a plurality of distance measuring devices at different positions, to compensate for the angle of the vessel body 1. The distance measuring device(s) may be used to accurately measure the level of water during filling at the tap, when the vessel body 1 is likely to held at an angle. Alternatively, the distance-measuring device may be positioned outside the water reservoir of the vessel, and may be directed at the water surface through a window.

As an alternative to being pulsed, the signal may be substantially continuous but modulated to provide a timing reference. Alternatively, the signal may be pulse modulated.

Alternatively, electromagnetic radiation or ultrasonic vibration may be directed obliquely at the surface of the liquid, and a detector is positioned to detect the radiation or vibration reflected off the surface. At the liquid level changes, the amplitude of the detected radiation or vibration changes, and the level is detected therefrom.

## Weight/Force Sensing

In another embodiment, as shown in Figure 19, the volume of liquid in the reservoir 5 is detected by weighing the reservoir, for example using a force sensor 51 in the body 1 or in the base 2. The force sensor 51 may comprise a strain gauge or other electrical, electronic or optical force detecting component arranged to measure the force between the body 1 and the base 2. The force sensor is calibrated to compensate for the weight of the body 1; since the liquid has a known density, the volume of liquid is proportional to the measured weight.

Additionally or alternatively, the force sensor 51 may be used to detect whether the body 1 is on the base 2, by determining whether the detected force is less than the calibrated weight of the body 1. For this function alone, an accurate force sensor is not required, but a pressure switch or light sensor may be used instead. The light sensor may be provided in the base 2, and be arranged to be occluded when the body 1 is located on the base 2.

Additionally or alternatively, the force sensor may be used to detect whether a user is touching the body 1, by detecting the resultant change in force between the body 1 and the power base 2. Hence, the force sensor 51 may be used as part of a touch sensitive user control.

Additionally or alternatively, the force sensor may be used to detect agitation of the liquid within the reservoir 5, caused by simmering and/or boiling of the liquid. The agitation causes small characteristic fluctuations in the force between the vessel body 1 and the power base 2, which may be sensed by the force sensor 51 and used by the control 10 to detect simmering and/or boiling.

The use of a force sensor 51 for boil detection may provide a particularly advantageous arrangement in which the number of electrical components within the vessel body 1 is reduced to a minimum. For example, the switching and control functions may be located in the power base 2 and/or an intermediate module 11a, if present. Boil sensing may be provided by a force sensor located within the power base 2. Hence, the electrical components within vessel body 1 need only comprise the element plate 12 and the cordless connector 3, and a dry boil protector if required by safety standards. The cordless connector 3 may be a washproof cordless connector as described for example in WO08/012506A1, so that the vessel body is washable in a dishwasher, and is particular suitable for heating liquids other than water.

In a further advantageous embodiment as shown in Figure 20, the vessel body is heated inductively by an induction heater 52 located within the power base 2, and boiling of the liquid is sensed by a force sensor 51 arranged within the power base and arranged to sense the force applied by the vessel body 1 onto the base 2. In this case, there is no need for any electrical components in the vessel body 1, only an inductively heatable portion such as a plate 12 forming at least part of the bottom of the reservoir 5. The construction of the vessel body 1 is greatly simplified and the vessel body can be made fully washproof without the need for electrical sealing systems. A user interface 11 may be provided in the base 2, or as a remote control.

Dry boil protection may be provided by selection of the material and/or structure of the inductively heatable portion so as to provide a Curie temperature above the normal temperature of the inductively heatable portion during heating, but below the point at which dry boiling would cause damage to the vessel body. Thus, dry boil protection may be provided by self-regulation of the temperature of the inductively heatable material. As an alternative, dry boiling may be sensed in the power base by detecting a change in the inductive coupling between the inductive heater and the inductively heatable material, caused by a rise in temperature of the latter.

In liquid heating vessels that do not include a cordless power base 2, the force sensor may be provided in the vessel body 1 and be arranged to detect the force between the body 1 and a surface on which the body 1 rests.

**Ultrasonic Scale Detection**

Scale deposit on the element plate 12 may alter the resonant properties of the element plate, and may in particular damp the resonance or alter the resonant frequency of the element plate. Hence, the control 10 may detect scale deposit on the element plate 12 by inducing ultrasonic vibration of the element plate at a nominal resonant frequency thereof, detecting the amplitude of the vibration, and determining the existence of scale deposit from the amplitude of the vibration. Reduced amplitude at the resonant frequency may indicate damping and/or a shift in resonant frequency and therefore the presence of scale on the element plate.

**Efficiency Rating**

At least some of the level sensors or sensing techniques described above may be used to detect the level or volume of liquid remaining in a liquid heating vessel after the liquid has been heated, some of the liquid has been dispensed, and the vessel is returned to its normal position, such as a kettle being returned to its cordless connector base. The liquid remaining in the vessel after heating and dispensing may indicate that the liquid heating vessel is not being used efficiently, as it was filled with more liquid than was needed.

Hence, in a further embodiment of the invention, the control measures the quantity of water heated during a heating operation, and the quantity of water remaining after the vessel body 1 is returned to the power base 2, for example following a dispensing operation. The ratio of remaining water to heated water is calculated and used to determine an efficiency rating which is indicated to the user as a measure of how efficiently the vessel is being used. This indication may be made every time the vessel body 1 is returned to its power base 2, or only if the efficiency rating is low i.e. the ratio of remaining water to heated water is high. The control may calculate an average efficiency rating, for example based on the average ratio of remaining water to heated water over the last 10 operations, or some other number of operations.

**Level Detection on or before Heating**

At least some of the level sensor or sensing techniques described above may be used to detect the level or volume of liquid in a liquid heating vessel on or before commencement of a heating operation, to determine whether the liquid level is above a predetermined maximum and/or below a predetermined minimum level; if not, the heating operation may be inhibited, or an indication given to the user. In this way, unsafe operation of the vessel may be prevented. The predetermined maximum and/or minimum may be set according to the operational parameters of the vessel, for example to correspond to maximum and minimum levels for safety purposes, or may be altered by the user, for example if a user wants to save energy by never heating more than a particular volume of water.

**Level Detection on Filling**

At least some of the level sensor or sensing techniques described above may be used to detect the level or volume of liquid in a liquid heating vessel while the vessel is being filled. A warning indication may be made to the user when a predetermined maximum level has been exceeded. In the case of the cordless vessel described above, the vessel body 1 may include a rechargeable power source so that the control may perform level detection when the vessel body 1 is removed from the base 2. The predetermined level may be set by the user, for example by means of the user interface 11. Preferably, this setting may be changed even when the vessel body 1 is removed from the base 2. For example, the user may select between two or more predetermined levels, such as full (e.g. 1.7 litres), ecological (1 litre), or single cup. If the predetermined level is exceeded, the user interface 11 may give the user the option to change to a higher level and continue filling, or empty out some of the water until the current level is reached.

**Boil Detection by Resistance**

In an alternative embodiment, boiling is detected by measuring the resistance of water in the reservoir 5. This may be done by measuring the resistance between electrodes in contact with the water; preferably, the element plate 12 forms one of the electrodes, while the other electrode is positioned in a side wall of the reservoir, below the minimum safe water level. Localised boiling may occur on the element plate 12 before the boiling point is reached. As the boiling point is approached, steam bubbles forming on the element plate 12 become larger and increase the resistance of the water as measured between the element plate 12 and the other electrode. The control program measures this resistance, and detects boiling when the resistance has increased by a predetermined percentage of its initial value, or the resistance increases at above a predetermined rate.

If the electrical resistance is very high because the electrode in the side wall is not immersed, the control program may determine that there is insufficient water in the vessel, and may inhibit heating.

**Boil Detection by Agitation/Turbulence**

In one embodiment, the agitation is monitored by a water level detector that is sensitive to small, rapid fluctuations of the water level as the water becomes agitated. One such level detector is the laser or acoustic level detector illustrated in Figure 18. The detector accurately measures fluctuations in the absolute distance to the water surface, and the control 10 detects when the fluctuations exceed a predetermined level to determine when boiling or simmering occurs. The predetermined level may vary dependent upon the amount of water in the vessel, which may also be determined by the device according to the absolute distance to the water surface.

In another embodiment, the agitation is monitored by an acoustic sensor that detects the characteristic sound of water reaching boiling point, such as the reduction in heating noise caused by a reduction in the collapse of steam bubbles within the water as the water reaches boiling.

Alternatively, boiling and/or simmering may be detected from fluctuations in angle of a part of the liquid surface. As can clearly be observed in a clear vessel, the liquid surface remains substantially horizontal during heating, exhibits some local variation in angle during simmering, and significant variation in local surface angle during boiling, because of increased turbulence or agitation of the liquid.

One embodiment that uses optical reflection from the liquid surface is shown in Figure 21. An emitter 48 is located in the bottom of the reservoir 5, and arranged to emit electromagnetic radiation towards the surface of the liquid from below. The emitted beam is sufficiently broad to illuminate a wide area of the surface at all liquid levels above a predetermined minimum level. A detector 49 is located in the bottom of the reservoir 5 at the opposite side, and is arranged to receive electromagnetic radiation reflected from at least part of the liquid surface. The emitter 48 and/or the detector 49 may be sealed within corresponding apertures in the element plate 12, or in an annular adaptor sealed around the periphery of the element plate 12.

The electromagnetic radiation may be narrow band radiation and the detector 49 may be arranged to detect in the narrow band, to reduce the effect of ambient radiation. For improved signal to noise ratio, the output of the emitter 48 may be modulated and the detector circuitry associated with the detector 49 may include a band-pass filter or phase-locked loop. The modulation may be code modulation, and the detector circuitry may include a code demodulator.

The radiation may be optical or near-optical, such as infrared. The emitter 48 may be an infrared LED.

Total internal reflection from the surface of the liquid occurs above the critical angle for the interface between the air and the liquid, as defined by:

$$\Theta_C = \sin^{-1}(n_2 / n_1)$$

where for water with infrared, the refractive index $n_1 = 1.33$ and for air, the refractive index $n_2 = 1.00$, hence the critical angle to the normal to the surface is about 50°.

The angle from the emitter 48 to the surface to the detector 49 may or may not be above the critical angle, depending on the liquid level. However, turbulence caused by boiling or simmering will cause the normal of the surface to fluctuate locally from the vertical, so that the intensity of radiation reflected from the surface and received by the detector 49 as a result of total internal reflection will also fluctuate. The control 10 detects these fluctuations from the detector 49 and determines a boiling or simmering condition therefrom.

In a variant shown in Figure 22, the emitter 48 and detector 49 are both located at or towards the upper part of the reservoir 5, so as to detect radiation reflected off the surface of the liquid from above the surface.

In another variant shown in Figure 23, the emitter 48 and the detector 49 are placed on opposite sides of the liquid surface, so as to detect the intensity of radiation that is not reflected, which will also fluctuate with turbulence.

**Illumination**

The lighting connector 38 may be connected to an array of LED's and/or other light sources arranged to illuminate different parts of the vessel and/or to provide illumination from the vessel. At least some of the light sources may be powered by a rechargeable power source within the vessel body 1 so that they may be illuminated even when the vessel body 1 is separate from the power base 2. The rechargeable power source may be recharged when the vessel is connected to mains power and/or from a solar panel on the vessel.

As shown in Figure 24, one such light source 52 is arranged on the handle 9, facing inwardly so as to illuminate a water window 54 through which the water level may be seen. Another such light source 56 may be arranged to illuminate the inside of the spout 7 as an aid to filling the vessel. Another such light source 58 is arranged to illuminate an area immediately forward of the spout 58, as an aid to pouring water from the vessel. Another such light source 60 is arranged below the lid 8, which is transparent or translucent, and directs light through the lid to provide a lighting effect or an indication. Another such light source 62 may be located so as to illuminate the water within the reservoir 5. Another such light source (not shown) may illuminate the user interface 11, or a separate user actuable mechanical switch which may be provided in addition to the user interface portion, to provide a more familiar means of operation.

In another embodiment shown in Figure 25, the vessel body 1 includes a secondary reservoir 80 arranged to be filled with water by the user and to discharge water into the main reservoir 5 for heating, for example through a valve 82. In one specific embodiment, the secondary reservoir 80 contains a filter and the valve 82 is arranged to admit filtered water into the main reservoir 5. In another specific embodiment, the secondary reservoir is for storing water that is not heated, and the valve 82 is user-actuable to dispense the required amount of water into the main reservoir 5 to be heated.

In this embodiment, in addition to the light source 62 for illuminating the contents of the main reservoir 5, there is provided a light source 84 for illuminating the contents of the secondary reservoir 80. The light sources 62 and 84 may generate light of mutually different colours so as to highlight the main reservoir 5 and secondary reservoir 80. The light sources 62 and 84 may be controlled independently.

One or more parts of the vessel body 1 may be photoluminescent, so as to provide light even when electrical power is not available. For example, the spout 7 or handle 9 may be partially or completely luminescent, to assist location of the vessel body 1 in the dark. Preferably, the or each luminescent part may be illuminated by a powered light source when power is available, to 'charge up' the luminescent part. The luminescent part may of course be charged by ambient light.

Where illumination is used to convey information to the user, an audible indication may alternatively or additionally be used. Alternatively, the information may be provided on the LCD display 36.

As an alternative or additionally to the LCD display 36, status information may be projected from the vessel onto a surface, such as a work surface or a ceiling. For example, the lid 8 may include an LCD similar to the LCD display 36, and the light source 60 may project light through the LCD display in the lid. An advantage of such a status display is that it is more easy to read than a display mounted on the vessel, and may be more aesthetically pleasing.

**Illumination States**

In one embodiment of the invention, the illumination state of a liquid heating vessel may follow a predetermined sequence designed to prompt the user to perform a specific action, rather than merely indicating the operational state of the vessel. For example, a power switch of the vessel may be illuminated initially. When the power switch of the vessel is actuated so that a heating operation commences, the liquid within the vessel is then illuminated. Optionally, the illumination state of the liquid may change as the liquid is heated, for example to indicate the temperature of the liquid. When the liquid has boiled, the spout may be illuminated to show that the liquid is ready to be dispensed. Optionally, a heating element or element plate may be illuminated when a dry boil condition is detected, or when excess scale is detected. Hence, the illumination is localised to indicate a part of the vessel to which the current operational state relates.

In conventional kettles or other liquid heating vessels, there is a simple one-to-one correlation between the operational state of the vessel and the illumination state of the vessel. For example, one LED is lit when the vessel is in heating mode, whilst another LED is lit when the vessel is in keep warm mode.

In another embodiment of the invention, the current illumination state may be a function of a previous operational state of the vessel and of a predetermined change in the operational state or the condition of the vessel. For example, the control may constitute a finite state machine having a finite set of illumination states, transitions between those states being determined by predetermined changes in the operational state or condition of the liquid heating vessel. Advantageously, the above illumination states may provide a more intuitive indication of the operational state of the vessel. Additionally, state-based illumination may provide important additional information to the user.

For example, many users prefer to use freshly boiled water for making beverages, rather than using water that has been previously boiled in the vessel. Different illumination states may be provided for heating water that has been previously boiled in the vessel and for heating water that has not previously been boiled. The electronic control distinguishes between the two conditions by monitoring the previous temperature profile of water within the vessel. For previously boiled water, the temperature will cool gradually, while refilling the vessel will cause a discontinuity in the measured temperature. Hence, for the same current operational state of the vessel, different illumination may be provided according to the previous operational state or condition of the vessel.

In the above discussion, a distinction is made between the operational state and the condition of the vessel. The operational state may be an operational mode of the vessel, such heating mode, keep warm mode or prolonged boil mode, or a switching state such as detection of boil or target temperature, or dry boil. The condition of the vessel may include the current sensed temperature of the liquid within the vessel or of the element plate 12, the sensed liquid level within the vessel, or the ambient condition such as lighting levels around the vessel, ambient temperature or pressure.

For example, in the forced dry boil mode described above, the vessel control has detected that descaling is necessary and there is no liquid in the vessel, both of which are conditions of the vessel. After forced dry boil, power to the element plate 12 is switched off. The user interface 11 or illumination state of the vessel may then indicate to the user that descaling is complete; this is a function of the current operational state and of previous conditions of the vessel.

In another embodiment of the invention, the illumination state may be controlled in accordance with a property of the environment around the vessel. For example, an illumination state may be switched on in response to the proximity of a user, or the user touching a part of the vessel without actuating a mechanical switch. For example, a power switch may be illuminated in response to the user being near or touching the vessel, to guide the user to the user operable part of the vessel. Alternatively, the illumination state may be activated by sound.

An illumination state may change according to the ambient light level. In one example, an illumination state is dimmed as the ambient light dims, so that the illumination state is visible without expending excessive power. Similarly, the volume of audible effects may be varied according to ambient sound levels, so as to be audible without consuming excessive power or causing irritation or surprise.

Alternatively, the heating power may be varied according to the level of ambient noise around the vessel, such that the heating power is reduced when the detected ambient noise is below a predetermined threshold. The level of noise caused by heating depends on the heating power, since greater heating power tends to cause more localised boiling. In noisy environments, the noise of a kettle at full heating power would hardly be noticed, so there is no disadvantage to heating at full power, so that the required temperature is reached as quickly as possible. In quiet environments, the noise of a kettle at full heating power may be obtrusive, and the heating power is therefore reduced.

Alternatively, a illumination state that is designed to assist a user locate part of the vessel, or to pour from or to fill the vessel, may only be activated when the ambient light is dim and therefore the user may need assistance by means of the illumination state. Illumination may be switched off or dimmed after a predetermined time, to conserve power.

**Colour Changing Material**

In another embodiment of the present invention, a part of the vessel body 1 and/or the power base 2 that is visible to the user may be made from a colour changing material. In one example, a part of the vessel body 1 in thermal contact with the liquid in the reservoir 5 may be made from a thermochromic material, so that the temperature of the liquid is indicated visually by the colour of the material. For example, a thermochromic material that changes colour at a sub-boiling temperature, such as approximately 80° C, may indicate whether the liquid is hot enough to make a beverage such as coffee, soup or certain types of tea, that does not require the water to be at or near boiling point. This may avoid unnecessary reheating of the liquid.

Alternatively, the colour changing material may be an electrochromic material, that changes colour in response to an electric field or current. A part made from electrochromic material may be controlled by the electronic control 10, in a similar way to a light source as described above.

In one advantageous example, part or all of a water window, through which liquid in the reservoir 5 may be seen, is made of a transparent or translucent electrochromic material. This provides a particularly striking visual indicator or aesthetic feature for the user, particularly when combined with a light source within the reservoir 5. Alternatively or additionally, an opaque wall or part of a wall of the vessel body 1 may be made of electrochromic material.

**Cavity Wall Illumination**

In another embodiment of the present invention, as shown in Figure 26, the side wall of the vessel body 1 comprises an inner wall 64 and an outer wall 66 forming a cavity therebetween. The cavity may be sealed and contain a partial vacuum, for improved thermal insulation of the reservoir, or may contain air at ambient pressure. The outer face of the inner wall 64 is preferably silvered, while at least part of the outer wall 66 is preferably transparent or translucent. The inner wall 64 preferably includes a transparent or translucent window 54 through which the level of water in the reservoir may be seen, and the outer wall 66 includes a corresponding window. In this way, the reservoir may be thermally insulated while still allowing the user to judge the water level.

Advantageously, a light source 68 provides illumination within the cavity, so that light is reflected off the silvered inner wall 64 through the outer wall 66. This provides a particularly striking lighting effect that makes use of the silvered inner wall 64, which also has the advantage of improved thermal insulation. Preferably, the light source 68 is provided in the vicinity of the window 54.

**Illumination from Power Base**

Another embodiment of the present invention is applicable to an immersed element vessel as shown in Figure 27, in which an element 12 is immersed within the reservoir 5 rather than forming the base of the reservoir 5. In this case, the cordless connectors 3 and 4 are not 360° connectors, but require alignment between the vessel body 1 and the power base 2. A light source 70 is provided in the power base 2 and is arranged to illuminate a window 72 that extends down to the bottom of the vessel body 1, across its base, and up the other side, as shown schematically in Figure 28. This allows the window 72 to be manufactured as a single piece providing a window on opposite sides of the vessel body 1.

In an alternative embodiment applicable to 360° connectors, the light source 70 is arranged to provide light into an annular light guide in the vessel body 1, similar to that shown in Figure 10, which then distributes illumination around the vessel body.

**Halogen Heaters**

In another embodiment shown in Figure 29, a halogen lamp 80 is provided as a keep warm heater; hence, when the keep warm state is entered, the halogen lamp 80 is illuminated, thereby warming and illuminating the contents of the reservoir at the same time. This provides a visual indication that the keep warm state is operational. The element plate 12 is used as the main heater, but does not need a separate keep-warm track. As an alternative to the halogen lamp 80, another electrically powered combined heat and light source may be provided, such as a high-power LED array.

In another embodiment as shown in Figure 30, heating is provided by a plurality of halogen lamps 74a, 74b, 74c positioned below a transparent plate 76 forming the bottom of the reservoir 76. The halogen lamps 74a, 74b and 74c are individually switchable so that the heating power may be varied; for example, one lamp may be switched on for the keep warm state, whilst all the lamps may be switched on for maximum heating power. As a result, the lighting state varies automatically as the heating state varies. To enhance the lighting effect, the transparent plate 76 may include a plurality of different coloured filters corresponding to the different halogen lamps 74a, 74b, and 74c. In this way, the contents of the reservoir may be illuminated with different colours according to which of the lamps are switched on. The power level of each of the lamps 74a, 74b, and 74c may be controlled, for example by corresponding dimmers, so that the illumination brightness and colour may be more freely varied.

**Alternative Embodiments**

In addition to the variants mentioned above, other variants are envisaged as falling within the scope of the invention. For example, the present invention is not limited to kettles and controls therefore; aspects of the invention may be applied to wasserkochers, coffee makers such as moka makers, Turkish tea makers, samovars, water boiling urns, pans, sauce makers, steamers, chocolate fountains, fondues, steamers, slow cookers and milk frothers, for example.

**Claims**

1. A liquid heating vessel comprising a vessel body (1), a cordless base (2) for providing an electrical connection to the vessel body (1) regardless of the rotational orientation of the vessel body (1) on the base (2), an electronic control (10) and an infra-red or optical connector for the control (10) between the vessel body (1) and the base (2), the infra-red or optical connector comprising a circular or annular light guide (2a) and an infra-red or optical coupler (1a) arranged respectively on one of the vessel body (1) and the base (2), such that the infra-red or optical coupler (1a) provides an infra-red or optical coupling with the circular or annular light guide (2a) when the vessel body (1) is positioned on the base (2), regardless of the rotational orientation of the vessel body (1) on the base (2), wherein the vessel body (1) includes a power supply operable to supply power to at least a part of the electronic control (10) provided in the vessel body (1) when the vessel body (1) is disconnected from the base (2).

2. The vessel of claim 1, wherein the infra-red or optical connector is arranged to connect a light source (70) in the base (2) to illumination means in the vessel body (1).

3. The vessel of claim 1, wherein the optical connector is arranged to connect optical signalling between the vessel body (1) and the base (2).

4. The vessel of claim 1, further comprising a remote control device separate or separable from the vessel, said device comprising:

   a. a user interface (11) for receiving a user input;
   b. sensing means for sensing a condition relating to the vessel;
   c. switching means for switching a heating state of the vessel; and
   d. control means (10) responsive to said user input and the sensing means to control the switching means.

5. The vessel of claim 4, wherein the control means (10) is provided at least partially in said remote control device.

6. The vessel of claim 5, wherein the remote control device is programmable by the user.

7. The vessel of any one of claims 4 to 6, wherein the remote control device further includes indicating means for providing an indication to the user, responsive to the control means.

8. The vessel of any one of claims 4 to 7, wherein the sensing means is arranged to sense a liquid level within the vessel.

9. The vessel of any one of claims 4 to 8, wherein the sensing means is arranged to sense a boiling condition of liquid in the vessel.

10. The vessel of any one of claims 4 to 9, including a bidirectional communication link between the vessel and the remote control device.

11. The vessel of any one of claims 4 to 10, further including an intermediate device arranged to provide communication between the vessel and the remote control device.

12. The vessel of claim 1, wherein the electronic control (10) has a user interface (11) that is operable, when the vessel body (1) is disconnected from the base (2), to change a setting of the electronic control (10).


**Patentansprüche**

1. Behälter für die Erwärmung von Flüssigkeit umfassend einen Behälterkörper (1), eine kabellose Basis (2) für die Bereitstellung einer elektrischen Verbindung zum Behälterkörper (1) ungeachtet der Drehausrichtung des Behälterkörpers (1) auf der Basis (2), eine elektronische Steuerung (10) und einen Infrarot- oder optischen Verbinder für die Steuerung (10) zwischen dem Behälterkörper (1) und der Basis (2), wobei der Infrarot- oder optische Verbinder einen kreisförmigen oder ringförmigen Lichtleiter (2a) und einen Infrarot- oder optischen Koppler (1a) umfasst, die jeweils auf dem Behälterkörper (1) oder auf der Basis (2) angeordnet sind, sodass der Infrarot- oder optische Koppler (1a) eine Infrarot- oder optische Kopplung mit dem kreisförmigen oder ringförmigen Lichtleiter (2a) bereitstellt, wenn der Behälterkörper (1) auf der Basis (2) positioniert wird, ungeachtet der Drehausrichtung des Behälterkörpers (1) auf der Basis (2), wobei der Behälterkörper (1) eine Energieversorgung umfasst, die betreibbar ist, um Energie zumindest zu einem Teil der im Behälterkörper (1) bereitgestellten elektronischen Steuerung (10) zu liefern, wenn der Behälterkörper (1) von der Basis (2) entfernt ist.

2. Behälter nach Anspruch 1, wobei der Infrarot- oder optische Verbinder angeordnet ist, um eine Lichtquelle (70) in der Basis (2) mit einem Beleuchtungsmittel im Behälterkörper (1) zu verbinden.

3. Behälter nach Anspruch 1, wobei der optische Verbinder angeordnet ist, um eine optische Signalgabe zwischen dem Behälterkörper (1) und der Basis (2) zu verbinden.

4. Behälter nach Anspruch 1 ferner umfassend eine vom Behälter getrennte oder trennbare Fernsteuerungsvorrichtung, wobei die Vorrichtung Folgendes umfasst:

   a. eine Benutzerschnittstelle (11) zum Empfangen einer Benutzereingabe;
   b. Erkennungsmittel zum Erkennen einer Bedingung im Zusammenhang mit dem Behälter;
   c. Schaltmittel zum Wechseln eines Heizzustands des Behälters; und
   d. Steuerungsmittel (10), das auf die Benutzereingabe und das Erkennungsmittel zum Steuern des Schaltmittels reagiert.

5. Behälter nach Anspruch 4, wobei das Steuerungsmittel (10) zumindest teilweise in der Fernsteuerungsvorrichtung bereitgestellt ist.

6. Behälter nach Anspruch 5, wobei die Fernsteuerungsvorrichtung durch den Benutzer programmiert werden kann.

7. Behälter nach einem der Ansprüche 4 bis 6, wobei die Fernsteuerungsvorrichtung ferner ein Anzeigemittel zum Bereitstellen einer Angabe für den Benutzer umfasst, das auf das Steuerungsmittel reagiert.

8. Behälter nach einem der Ansprüche 4 bis 7, wobei das Erkennungsmittel angeordnet ist, um einen Flüssigkeitspegel in dem Behälter zu erkennen.

9. Behälter nach einem der Ansprüche 4 bis 8, wobei das Erkennungsmittel angeordnet ist, um einen Kochzustand der Flüssigkeit in dem Behälter zu erkennen.

10. Behälter nach einem der Ansprüche 4 bis 9 umfassend eine bidirektionale Kommunikationsverknüpfung zwischen dem Behälter und der Fernsteuerungsvorrichtung.

11. Behälter nach einem der Ansprüche 4 bis 10 ferner umfassend eine dazwischenliegende Vorrichtung, die angeordnet ist, um Kommunikation zwischen dem Behälter und der Fernsteuerungsvorrichtung bereitzustellen.

12. Vorrichtung nach Anspruch 1, wobei die elektronische Steuerung (10) eine Benutzerschnittstelle (11) hat, die betreibbar ist, wenn der Behälterkörper (1) von der Basis (2) getrennt ist, um eine Einstellung auf der elektronischen Steuerung (10) zu ändern.


**Revendications**

1. Récipient chauffant pour liquide comprenant un corps de récipient (1), une base sans fil (2) destinée à fournir une connexion électrique au corps de récipient (1) indépendamment de l'orientation en rotation du corps de récipient (1) sur la base (2), une commande électronique (10) et un connecteur infrarouge ou optique de la commande (10) entre le corps de récipient (1) et la base (2), le connecteur infrarouge ou optique comprenant un conduit de lumière circulaire ou annulaire (2a) et un coupleur infrarouge ou optique (1a) agencé respectivement sur l'un parmi le corps de récipient (1) et la base (2), de sorte que le coupleur infrarouge ou optique (1a) fournit un couplage infrarouge ou optique avec le conduit de lumière circulaire ou annulaire (2a) lorsque le corps de récipient (1) est positionné sur la base (2), indépendamment de l'orientation en rotation du corps de récipient (1) sur la base (2), dans lequel le corps de récipient (1) inclut une alimentation électrique fonctionnelle pour fournir de l'énergie à au moins une partie de la commande électronique (10) disposée dans le corps de récipient (1) lorsque le corps de récipient (1) est déconnecté de la base (2).

2. Récipient selon la revendication 1, dans lequel le connecteur infrarouge ou optique est agencé pour connecter une source lumineuse (70) dans la base (2) à un moyen d'éclairage dans le corps de récipient (1).

3. Récipient selon la revendication 1, dans lequel le connecteur optique est agencé pour connecter une signalisation optique entre le corps de récipient (1) et la base (2).

**4.** Récipient selon la revendication 1, comprenant en outre un dispositif de télécommande séparé ou pouvant être séparé du récipient, ledit dispositif comprenant :

> a. une interface utilisateur (11) destinée à recevoir une saisie utilisateur ;
> b. un moyen de détection destiné à détecter un état relatif au récipient ;
> c. un moyen de commutation destiné à commuter un état de chauffe du récipient ; et
> d. un moyen de commande (10) sensible à ladite saisie utilisateur et au moyen de détection afin de commander le moyen de commutation.

**5.** Récipient selon la revendication 4, dans lequel le moyen de commande (10) est disposé au moins en partie dans ledit dispositif de télécommande.

**6.** Récipient selon la revendication 5, dans lequel le dispositif de télécommande peut être programmé par l'utilisateur.

**7.** Récipient selon l'une quelconque des revendications 4 à 6, dans lequel le dispositif de télécommande inclut en outre un moyen d'indication destiné à fournir une indication à l'utilisateur, sensible moyen de commande.

**8.** Récipient selon l'une quelconque des revendications 4 à 7, dans lequel le moyen de détection est agencé pour détecter un niveau de liquide à l'intérieur du récipient.

**9.** Récipient selon l'une quelconque des revendications 4 à 8, dans lequel le moyen de détection est agencé pour détecter un état d'ébullition du liquide dans le récipient.

**10.** Récipient selon l'une quelconque des revendications 4 à 9, comprenant une liaison de communication bidirectionnelle entre le récipient et le dispositif de télécommande.

**11.** Récipient selon l'une quelconque des revendications 4 à 10, incluant en outre un dispositif intermédiaire agencé pour fournir une communication entre le récipient et le dispositif de télécommande.

**12.** Récipient selon la revendication 1, dans lequel la commande électronique (10) présente une interface utilisateur (11) qui est fonctionnelle, lorsque le corps de récipient (1) est déconnecté de la base (2), de manière à modifier un paramètre de la commande électronique (10).

Fig. 1

Fig. 2

Fig. 3

Fig. 4

Fig. 5

Fig. 6

Fig. 7

Fig. 8

Fig. 9a

Fig. 9b

EP 2 165 243 B1

Fig. 9c

EP 2 165 243 B1

Fig. 9d

Fig. 10

Fig. 11

Fig. 12

Fig. 13

Fig. 14

```
┌─────────────────────┐
│        S1           │
│     Initial boil    │
│      operation      │
└─────────────────────┘
          │
┌─────────────────────┐
│        S2           │
│    Detect boil      │
│  temperature $T_B$  │
└─────────────────────┘
          │
┌─────────────────────┐
│        S3           │
│ Set initial boil    │
│ reference           │
│ temperature $T_{BR}$│
└─────────────────────┘
          │
┌─────────────────────┐
│        S4           │
│  Subsequent boil    │
│     operation       │
└─────────────────────┘
          │
┌─────────────────────┐
│        S5           │
│   Measure rate of   │
│ temperature rise $\Delta T/\Delta t$ │
└─────────────────────┘
          │
┌─────────────────────┐
│        S6           │
│ Calculate target temperature │
│ $T_T = f(T_{BR}, \Delta T/\Delta t)$ │
└─────────────────────┘
          │
        ◇ S7
     Boil detected?   ── Y
          │ N
        ◇ S8
      $T = T_T$?      ── Y
          │
    N ────┘
          │
   ( S9 Boil determined )
```

Fig. 15

Fig. 16

Fig. 17

Fig. 18

Fig. 19

Fig. 20

Fig. 21

Fig. 22

Fig. 23

Fig. 24

Fig. 25

Fig. 26

Fig. 27

Fig. 28

Fig. 29

Fig. 30

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- GB 2185161 A
- GB 2228634 A
- WO 2008144805 A
- WO 9406185 A
- WO 9917645 A
- WO 0683162 A
- EP 1289395 A
- WO 08012506 A1